# EUROPEAN PATENT APPLICATION

(11) **EP 2 610 707 A2**
(43) Date of publication of application: **03.07.2013**
(21) Application number: 12193996.1
(22) Date of filing: 23.11.2012
(51) Int. Cl.: G06F 3/01

(54) **Input system**

(30) Priority: 27.12.2011 JP 2011286487; 28.03.2012 JP 2012074471
(71) Applicant: AISIN AW CO., LTD., Anjo-shi, Aichi 444-1192 (JP)
(72) Inventor: Hayatoma, Takeo, Anjo-shi, Aichi 444-1192 (JP); Matsuoka, Masatoshi, Anjo-shi, Aichi 444-1192 (JP); Tanaka, Saijiro, Anjo-shi, Aichi 444-1192 (JP); Koyama, Ryoji, Anjo-shi, Aichi 444-1192 (JP)
(74) Representative: TBK

(57) **Abstract**

An input system comprises a display device having a display screen, an input detection device that has an operation surface provided at a distance from the display device and detects an operation performed on the operation surface, and a control device. The input system further comprises an elevation formation device capable of forming an elevated portion on the operation surface, and the control device controls a display content to be displayed on the display screen, decides a position of the elevated portion on the operation surface in accordance with the display content, and controls the elevation formation device so as to form the elevated portion at the decided position.

## Description

The present invention relates to an input system including a display device having a display screen, an input detection device having an operation surface provided at a distance from the display device to detect an operation performed on the operation surface, and a control device.

### Description of the Related Art

Devices including an input system as standard equipment are utilized in laptop personal computers etc., for example. The input system includes a display device having a display screen, an input detection device having an operation surface provided at a distance from the display device to detect an operation performed on the operation surface, and a control device. A user performs a drag operation using a fingertip, the tip of a stylus pen, or the like on the operation surface provided on a surface of a touch pad provided by way of example as the input detection device to move an operation cursor displayed on the display screen communicably connected to the input detection device. In addition, the user performs a predetermined operation on the operation surface with the operation cursor displayed on the display screen located over an operation figure (such as an operation icon, for example) to achieve a function associated with the operation figure. The thus configured input system may be utilized to perform predetermined operation input to in-vehicle navigation apparatuses.

The in-vehicle navigation apparatuses are often operated by a driver of a vehicle. In such a case, the user (a driver of the vehicle) operates the navigation apparatus in between driving. Therefore, it is difficult to perform an operation while closely watching the display screen, and a desired operation may not be performed accurately. In view of this point, there is proposed an input system that allows to perform operation input utilizing tactile sensation (a tactile feel). For example, Japanese Patent Application Publication No. 2011-54196 (JP 2011-54196 A) describes an art for providing tactile feedback through vibration or the like to an operation surface in the case where the position of an operation cursor displayed on a display screen coincides with the position of an operation figure.

In the system according to JP 2011-54196 A, however, vibration from an actuator is provided as feedback via the entire input detection device. Thus, there remains an ambiguity in discrimination through tactile sensation as to coincidence in position between the operation cursor and the operation figure. The input system according to the related art leaves room for improvement in this point.

### SUMMARY OF THE INVENTION

In view of the foregoing, it is desired to provide an input system that enables to perform reliable operation input compared to the related art without the need to closely watch a display screen.

According to an aspect of the present invention, there is provided an input system including a display device having a display screen, an input detection device that has an operation surface provided at a distance from the display device and detects an operation performed on the operation surface, and a control device, in which the input system further includes an elevation formation device capable of forming an elevated portion on the operation surface, and the control device is configured to control a display content to be displayed on the display screen, decides a position of the elevated portion on the operation surface in accordance with the display content, and to control the elevation formation device so as to form the elevated portion at the decided position.

According to the aspect, the control device may be configured to control the elevation formation device so as to form the elevated portion at a position on the operation surface in accordance with the display content to be displayed on the display screen. By forming the elevated portion which is distinctly elevated compared to the other portions of the operation surface, the user can directly recognize the position of the elevated portion through tactile sensation. This facilitates association between the display content displayed on the display screen and the overall shape of the elevated portion recognized through tactile sensation, which makes it easy to perform desired operation input via the input detection device. Thus, it is possible to provide an input system that enables to perform reliable operation input compared to the related art without the need to closely watch a display screen.

The display content may include a functional element to which a function for executing a process is set, and the control device may be configured to decide the position of the elevated portion on the operation surface on the basis of an arrangement of the functional element on the display screen.

According to the configuration, association between the functional element on the display screen and the overall shape of the elevated portion recognized through tactile sensation can be established easily. Hence, operation input to a desired functional element can be performed easily via the input detection device. Thus, a desired process can be executed easily without the need to closely watch the display screen.

The display content may include a plurality of the functional elements, and the control device may be configured to decide the position of the elevated portion on the operation surface on the basis of a relative arrangement between the plurality of functional elements.

According to the configuration, association between the arrangement of the plurality of functional elements on the display screen and the overall shape of the elevated portion recognized through tactile sensation can be established easily. Hence, operation input to a desired functional element selected from the plurality of functional elements can be easily performed via the input detection device.

The elevation formation device may be capable of forming a plurality of the elevated portions on the operation surface, and the control device may be configured to decide the positions of the plurality of elevated portions such that the plurality of elevated portions are formed on the operation surface in correspondence with the relative arrangement between the plurality of functional elements on the display screen.

According to the configuration, one-to-one correspondence can be established between the arrangement of the plurality of functional elements on the display screen and the arrangement of the plurality of elevated portions on the operation surface. Hence, association between the display content on the display screen and the overall shape of the elevated portions recognized through tactile sensation can be established easily and appropriately. Thus, more reliable operation input can be performed.

The functional element may be an operation figure which is displayed on the display screen and for which a select operation can be performed, and in the case where a depression operation for the elevated portion corresponding to the operation figure is detected, the control device may be configured to receive input of a select operation for the operation figure.

According to the configuration, input of a select operation for the operation figure can be received on the basis of detection of a depression operation for the elevated portion corresponding to the operation figure serving as a type of the functional element. Hence, start of execution of a process associated with the operation figure can be determined appropriately.

The display content may include a partition line that partitions the display screen into a plurality of partitions, and the control device may be configured to decide the position of the elevated portion on the operation surface on the basis of an arrangement of the partition line on the display screen.

According to the configuration, the elevated portion can be formed on the operation surface in correspondence with the partition line on the display screen. Hence, it is possible to set a plurality of regions (partitions) separated by the elevated portion on the operation surface in correspondence with the plurality of partitions on the display screen. Thus, operation input in a desired partition on the display screen can be performed easily.

The control device may be configured to receive operation input for each of the partitions on the operation surface separated by the elevated portion corresponding to the partition line.

According to the configuration, operation input can be received appropriately in accordance with the display content in each of the plurality of partitions on the display screen.

In the case where a depression operation for the elevated portion corresponding to the partition line is detected, the control device may be configured to execute a restoration process for restoring the elevated portion.

The partition line organizes the display content by separating adjacent partitions in the case where the display screen is divided into a plurality of partitions, for example. Although depressing the elevated portion corresponding to the partition line does not cause execution of any process, the elevated portion is preferably formed to organize the other elevated portions corresponding to the display content. Thus, by executing the restoration process on the basis of detection of a depression operation for the elevated portion corresponding to the partition line as in the configuration described above, the operation surface can be maintained in a state in which the elevated portions corresponding to the display content are organized appropriately.

In the case where a depression operation for the elevated portion is detected, the control device may be configured to determine an element of the display content corresponding to the elevated portion which has been subjected to the depression operation on the basis of a position of an operation on the operation surface, and may be configured to receive operation input to the element.

According to the configuration, operation input to an element, among the various elements forming the display content, corresponding to a position on the operation surface at which the depression operation is detected can be received appropriately. That is, it is possible to secure the effectiveness of operation input performed via the input detection device on the basis of correlation between the display content on the display screen and the position of the elevated portion on the operation surface recognized through tactile sensation.

The control device may be configured to define a part of the operation surface as a drag operation reception region in which a drag operation performed on the operation surface is preferentially received, and may be configured to form the elevated portion in a region of the operation surface other than the drag operation reception region.

According to the configuration, no elevated portion is formed in the drag operation reception region set on the operation surface. Thus, a drag operation performed in the drag operation reception region is not hindered. Hence, it is possible to appropriately receive a drag operation in the drag operation reception region, and to appropriately receive operation input corresponding to the display content while utilizing a guiding function provided by the elevated portion in the other region.

The elevation formation device may include a protrusion member that is advanced and retracted along a direction intersecting the operation surface, and may be capable of forming the elevated portion by protruding the protrusion member from the operation surface, and the protrusion member may be supported so as to be depressible to a position at or below the operation surface by a depression operation performed from outside.

According to the configuration, the elevated portion can be formed appropriately by protruding the protrusion member, which is configured to be advanced and retracted along a direction intersecting the operation surface, from the operation surface. In this event, with the elevated portion formed by the protrusion member, the reliability of position recognition through tactile sensation can be improved. In addition, the protrusion member is supported so as to be depressible to a position at or below the operation surface. This permits an operation to be performed at a position on the operation surface at which the protrusion member is provided. Hence, it is possible to receive operation input to the operation surface while guiding a fingertip of the user or the like to a position desired by the user using the elevated portion formed by the protrusion member. Hence, it is possible to improve the reliability of operation input that may be performed without the need to closely watch the display screen.

### BRIEF DESCRIPTION OF THE DRAWINGS

FIG. 1 is a schematic diagram showing an operation input system as mounted on a vehicle;
FIG. 2 is a block diagram showing a schematic configuration of a navigation apparatus;
FIG. 3 is a block diagram showing a schematic configuration of the operation input system;
FIG. 4 is a perspective view of a touch pad provided in an operation input device;
FIG. 5 is a sectional view showing the configuration of a drive mechanism;
FIG. 6 shows an example of operation input performed utilizing the operation input system;
FIG. 7 shows an example of operation input performed utilizing the operation input system;
FIG. 8 shows an example of operation input performed utilizing the operation input system;
FIG. 9 is a flowchart showing the overall process procedures of an operation input reception process;
FIG. 10 is a flowchart showing the process procedures of an input determination process according to a first embodiment;
FIG. 11 shows an example of operation input performed utilizing the operation input system;
FIG. 12 is a flowchart showing the process procedures of a protrusion status determination process;
FIG. 13 is a flowchart showing the process procedures of an input determination process according to a second embodiment;
FIG. 14 is a schematic diagram showing another example of the arrangement of protrusion members in a protruded state;
FIG. 15 is a schematic diagram showing another example of the arrangement of protrusion members in a protruded state; and
FIG. 16 is a schematic diagram showing another example of the arrangement of protrusion members in a protruded state.

### DETAILED DESCRIPTION OF THE EMBODIMENTS

### 1. First Embodiment

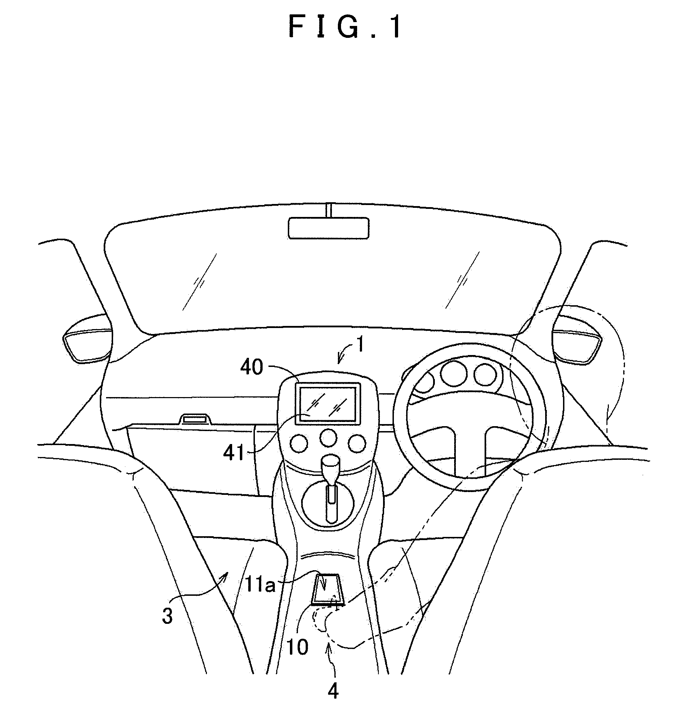

An input system according to a first embodiment of the present invention will be described with reference to the drawings. In this embodiment, an input system (operation input system) 3 configured to perform (predetermined) operation input prescribed in advance to an in-vehicle navigation apparatus 1 (see FIG. 1) is described. The operation input system 3 includes a display input device 40 communicably connected to the navigation apparatus 1, a touch pad 10, an elevation formation device 35, and a control device 5. In this embodiment, the touch pad 10 and the elevation formation device 35 form an operation input device 4. Thus, the operation input system 3 according to this embodiment includes the display input device 40, the operation input device 4, and the control device 5. In the following, a schematic configuration of the navigation apparatus 1, the configuration of the operation input device 4, the configuration of the operation input system 3, and the procedures of an operation input reception process will be described sequentially in this order.

### 1-1. Schematic Configuration of Navigation Apparatus

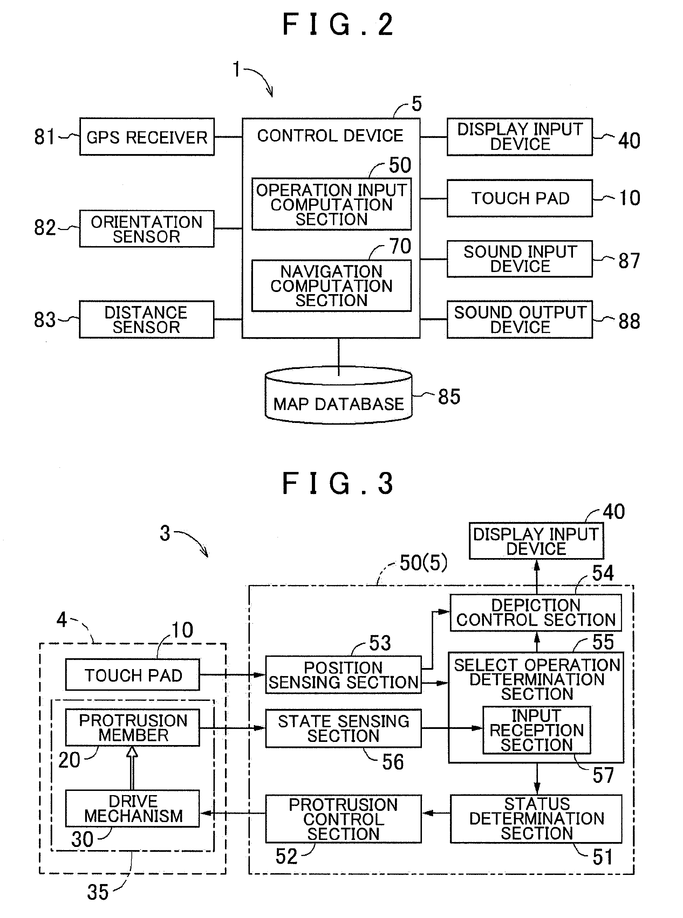

A schematic configuration of the navigation apparatus 1 will be described with reference to FIGS. 1 and 2. The navigation apparatus 1 is configured to achieve basic functions such as displaying the vehicle position, searching for a route from a departure place to a destination, providing route guidance, and searching for a destination. To this end, the navigation apparatus 1 includes the control device 5 as shown in FIG. 2. The control device 5 includes an arithmetic processing unit such as a CPU serving as a core member, and is formed as a processing device configured to perform a variety of processes on input data. The control device 5 includes an operation input computation section 50 and a navigation computation section 70. In addition, the control device 5 is communicably connected to a GPS receiver 81, an orientation sensor 82, a distance sensor 83, a map database 85, the display input device 40, the touch pad 10, a sound input device 87, and a sound output device 88.

The GPS receiver 81 receives GPS signals from Global Positioning System (GPS) satellites. The orientation sensor 82 detects the orientation of travel of the vehicle or variations in orientation of travel of the vehicle. The distance sensor 83 detects the vehicle speed and the travel distance of the vehicle. As well known, the navigation computation section 70 can derive an estimated vehicle position on the basis of information obtained from the GPS receiver 81, the orientation sensor 82, and the distance sensor 83, and further on the basis of map matching known in the related art.

The map database 85 stores map data divided for each predetermined partition. The map data include road network data including the connection relationship between a plurality of nodes corresponding to intersections and a plurality of links corresponding to roads connecting between the nodes. Each node has information on its position on the map expressed by the latitude and the longitude. Each link has information such as the road type, the length of the link, and the road width as its attribute information. The map database 85 is referenced by the navigation computation section 70 during execution of processes such as displaying a map, searching for a route, and map matching. The map database 85 is stored in a storage medium such as a hard disk drive, a flash memory, or a DVD-ROM.

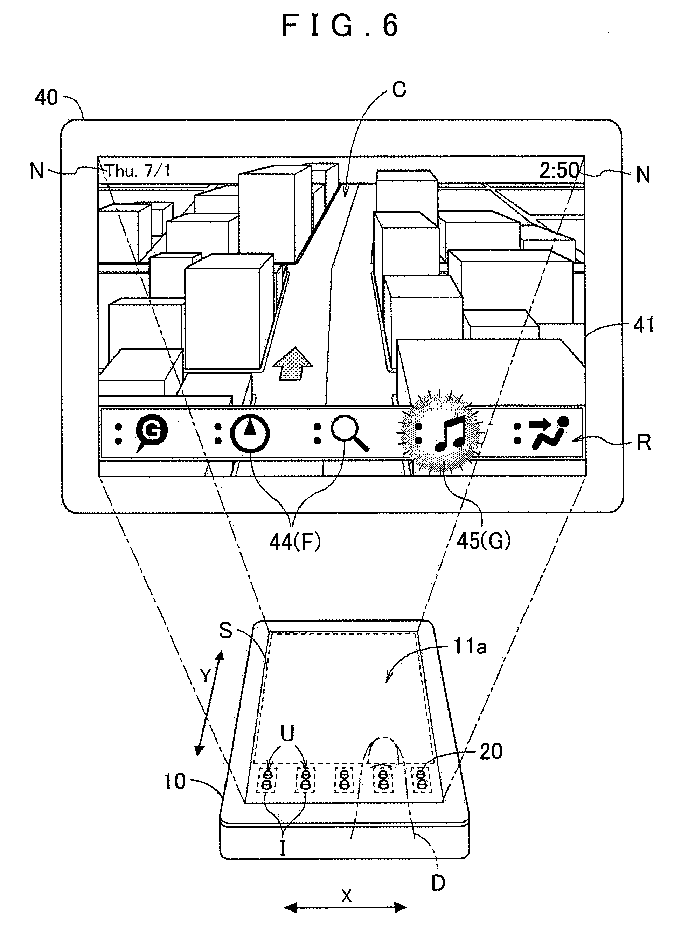

The display input device 40 is formed by integrating a display device such as a liquid crystal display device and an input device such as a touch panel. The display input device 40 includes a display screen 41, and displays on the display screen 41 a map of an area around the vehicle, images such as an operation figure 44 (see FIG. 6) associated with a predetermined function, and so forth, for example. In this embodiment, the display input device 40 corresponds to the "display device" according to the present invention. The operation figure 44 is a figure displayed on the display screen 41 to make it easy for the user (a passenger of the vehicle) to perceive a particular function to be achieved by operating the touch panel or the touch pad 10 to transfer operation input to the navigation apparatus 1. Examples of the operation figure 44 include operation icons, button images, and character key images depicted as illustrations or the like. The display input device 40 senses an object to be sensed in contact with or in proximity to the touch panel to receive input corresponding to the position of the sensed object. For example, the user may bring the object to be sensed such as a fingertip or the tip of a stylus pen in contact with or in proximity to the operation figure 44 displayed on the display screen 41 to select the operation figure 44 and achieve a function associated with the operation figure 44. In addition, the user may bring the object to be sensed in contact with or in proximity to a position other than the operation figure 44 displayed on the display screen 41 to select a location on a map, for example. The display input device 40 functions as a first operation input unit.

As shown in FIG. 1, the touch pad 10 is provided separately from the display input device 40. The touch pad 10 includes an operation surface 11a provided at a distance from the display input device 40, and detects an operation performed on the operation surface 11a. That is, the touch pad 10 senses an object to be sensed D (see FIG. 6) in contact with or in proximity to the operation surface 11a to receive input corresponding to the position of the sensed object. An operation cursor 45 (see FIG. 6) is displayed on the display screen 41 in correspondence with the position of the object sensed by the touch pad 10 serving as a pointing device. The user slides (drags) the obj ect to be sensed D such as a fingertip in contact with or in proximity to the operation surface 11a to move the operation cursor 45 on the display screen 41. Then, the user may perform a predetermined operation on the operation surface 11a with the operation cursor 45 located over the operation figure 44 to select the operation figure 44 and achieve a function associated with the operation figure 44. In addition, the user may perform a predetermined operation on the operation surface 11a with the operation cursor 45 located over a position other than the operation figure 44 displayed on the display screen 41 to select a location on a map, for example. In this embodiment, the touch pad 10 corresponds to the "input detection device" according to the present invention, and functions as a second operation input unit.

The display input device 40 is disposed at a position at which the display input device 40 may be seen without the need for the user (in particular, the driver of the vehicle) to significantly change his/her viewing direction during drive so as to be easily seeable by the user. In the example shown in FIG. 1, the display input device 40 is disposed at the center portion of the upper surface of a dashboard. However, the display input device 40 may be disposed in an instrument panel, for example. Meanwhile, the touch pad 10 is disposed at a position close to the hand of the user so as to be easily operable by the user. That is, the touch pad 10 is disposed at a position closer to the hand of the user and farther from the viewing direction than the display input device 40. In the example shown in FIG. 1, the touch pad 10 is disposed at a center console portion. However, the touch pad 10 may be disposed at the center portion of the upper surface of a dashboard, at a spoke portion of a steering wheel, or on a door panel, for example.

The sound input device 87 receives voice input from the user. The sound input device 87 includes a microphone or the like. The navigation computation section 70 may achieve functions such as searching for a destination through voice recognition and making a handsfree call on the basis of voice received through the sound input device 87. The sound input device 87 functions as a third operation input unit. The sound output device 88 includes a speaker or the like. The navigation computation section 70 may achieve functions such as providing voice guidance via the sound output device 88.

In the present invention, the specific configuration of the touch pad 10 serving as the second operation input unit, among various devices communicably connected to the navigation apparatus 1, has a novel feature in contrast to its counterpart according to the related art. Thus, the configuration of the operation input device 4 formed to include the touch pad 10 and the configuration of the operation input system 3 formed to include the operation input device 4 will be described in detail below.

### 1-2. Configuration of Operation Input Device

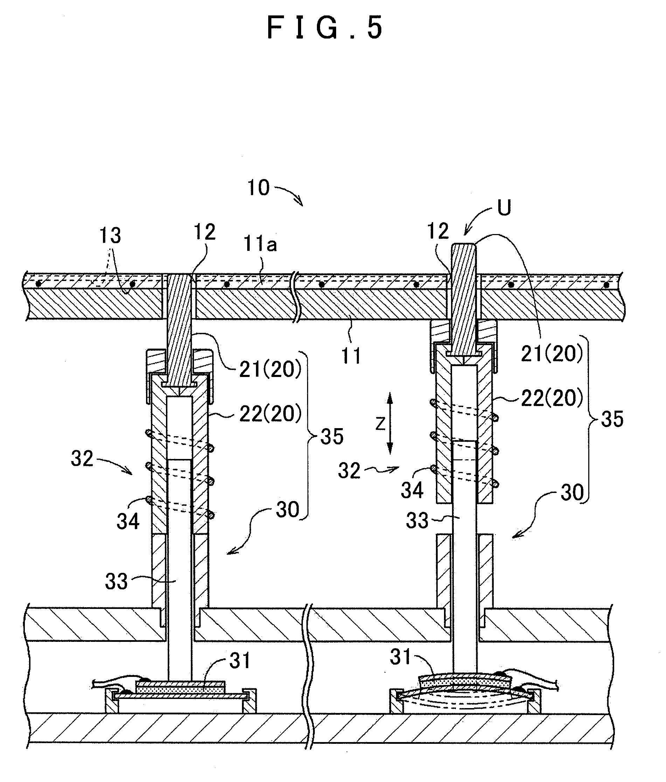

As shown in FIGS. 3 to 5, the operation input device 4 includes the touch pad 10 and the elevation formation device 35. In this embodiment, the elevation formation device 35 is formed by a protrusion member 20 and a drive mechanism 30. Thus, the operation input device 4 according to this embodiment includes the touch pad 10, the protrusion member 20, and the drive mechanism 30. The operation input device 4 is schematically configured such that the elevation formation device 35 is capable of forming an elevated portion U (see FIG. 5 etc.) on the surface of the touch pad 10. More specifically, the elevated portion U can be formed with the drive mechanism 30 driving the protrusion member 20 so as to protrude (appear and disappear) from the surface of the touch pad 10.

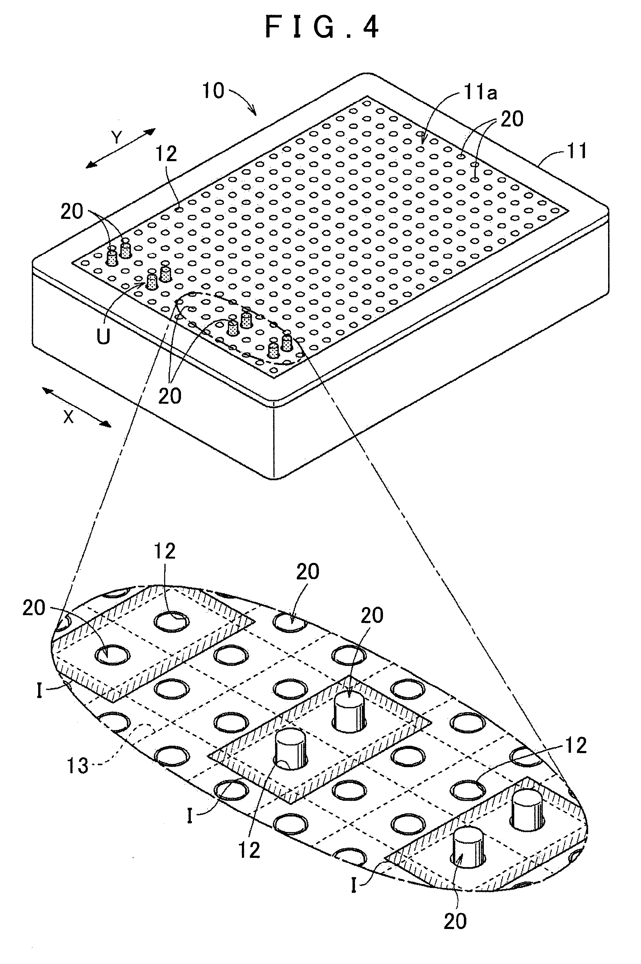

As shown in FIGS. 4 and 5, the touch pad 10 includes an operation plate 11, and the operation surface 11a is formed on the surface of the operation plate 11. The thus configured touch pad 10 may be of a variety of types such as a resistance film type and a capacitance type. In this embodiment, the touch pad 10 is of the capacitance type. A substrate and an electrode layer are provided on the back surface side of the operation surface 11a. The touch pad 10 senses the object to be sensed D such as a fingertip in contact with or in proximity to the operation surface 11a to receive input corresponding to the position of the sensed object.

The operation plate 11 is provided with a hole portion 12 that penetrates through the operation plate 11. In this embodiment, as shown in FIG. 4, a plurality (multiplicity) of such hole portions 12 are provided. Each of the hole portions 12 is formed to have a circular shape as seen from the surface side of the operation plate 11. The protrusion member 20 is inserted into each of the hole portions 12. Thus, in this embodiment, a plurality (multiplicity) of protrusion members 20 are also provided. Specifically, the number of the protrusion members 20 is the same as the number of the hole portions 12. The plurality of hole portions 12 and protrusion members 20 are arranged in accordance with a predetermined rule along the operation surface 11a. In this embodiment, the plurality of hole portions 12 and protrusion members 20 are arranged regularly at constant intervals in each of the vertical and horizontal directions over the entire operation surface 11a, and arranged in a matrix (orthogonal grid) as a whole. The hole portions 12 and the protrusion members 20 may be arranged in a honeycomb structure (hexagonal grid).

In this embodiment, conductive wiring members 13 connected to the electrode layer provided on the back surface side of the operation surface 11a are disposed in a grid along the operation surface 11a, and each of the hole portions 12 is provided around the wiring members 13. That is, in the embodiment, each of the hole portions 12 is provided in a rectangular region surrounded by a plurality of wiring members 13 so as not to interfere with any of the wiring members 13. In the case of a honeycomb structure, each of the hole portions 12 is provided in a hexagonal region surrounded by a plurality of wiring members 13 so as not to interfere with any of the wiring members 13. This prevents the function of the touch pad 10 from being impaired by the plurality of hole portions 12 provided in the operation plate 11.

As shown in FIG. 5, the protrusion member 20 includes a pin member 21 formed in the shape of an elongated circular column (pin) and a tubular member 22 that is generally cylindrical. The diameter of the pin member 21 is slightly smaller than the diameter of the hole portion 12. The tubular member 22 is formed by two semi-cylindrical members obtained by dividing the tubular member 22 into two equal halves along the axial direction of the tubular member 22. The pin member 21 is retained by the tubular member 22 with the lower end portion of the pin member 21 sandwiched between the two semi-cylindrical members. In this embodiment, the distal end portion (upper end portion) of the pin member 21 is inserted into each of the hole portions 12. In a reference state (state on the left side of FIG. 5) in which the protrusion member 20 is not driven by the drive mechanism 30, the distal end portion (distal end surface) of the pin member 21 which is formed to be flat is flush with the level of the operation surface 11a.

As shown in FIG. 5, the drive mechanism 30 is provided on the back surface side with respect to the operation plate 11. The drive mechanism 30 is configured to cause advancing/retracting operation of the protrusion member 20 along a direction (referred to as "advancing/retracting operation direction Z") intersecting (in this embodiment, orthogonally intersecting) the operation surface 11a. The drive mechanism 30 includes a piezoelectric element 31.

The piezoelectric element 31 is a passive element that utilizes a piezoelectric effect, and converts a voltage applied to a piezoelectric body into a force, or converts an external force applied to the piezoelectric body into a voltage. The piezoelectric element 31 is provided to vibrate in the advancing/retracting operation direction Z. A coupling member 33 is coupled to the piezoelectric element 31 to vibrate together with the piezoelectric element 31. The coupling member 33 is formed in the shape of an elongated circular column (pin). The distal end portion of the coupling member 33 on a side opposite to the side on which the coupling member 33 is coupled to the piezoelectric element 31 is inserted into a space inside the tubular member 22. The diameter of the coupling member 33 is substantially equal to the inside diameter of the tubular member 22. The outer peripheral surface of the coupling member 33 and the inner peripheral surface of the tubular member 22 contact each other.

A spring member 34 is provided at a position at which the coupling member 33 and the tubular member 22 contact each other so as to surround the tubular member 22 from the outer peripheral side. The spring member 34 provides an inward preliminary pressure with a predetermined magnitude to cause a predetermined friction force between the coupling member 33 and the tubular member 22 forming the protrusion member 20. The preliminary pressure applied by the spring member 34 is set such that the static friction force between the coupling member 33 and the tubular member 22 is at least larger than a component of a gravitational force acting on the protrusion member 20 in the advancing/retracting operation direction Z. In addition, the preliminary pressure is set such that the coupling member 33 and the tubular member 22 can slide with respect to each other with a dynamic friction force caused between the coupling member 33 and the tubular member 22 along with vibration of the piezoelectric element 31. In this embodiment, a slide mechanism 32 is formed by a slide section formed by the tubular member 22 and the coupling member 33 and the spring member 34 serving as a preliminary pressure application unit.

In this embodiment, in addition, the magnitude relationship between the speed of vibration of the piezoelectric element 31 to one side along the advancing/retracting operation direction Z and the speed of vibration of the piezoelectric element 31 to the other side can be adjusted by a protrusion control section 52 (see FIG. 3) included in the operation input computation section 50 to be discussed later. When the speed of vibration to the protrusion direction side (the surface side with respect to the operation surface 11a) is lower than the speed of vibration to the retraction direction side (the back surface side with respect to the operation surface 11a), which is opposite to the protrusion direction side, the protrusion member 20 is moved to the protrusion direction side on the basis of the difference between the static friction and the dynamic friction caused between the coupling member 33 and the tubular member 22. This allows the distal end portion of the protrusion member 20 (pin member 21) to be protruded from the surface of the operation surface 11a. That is, the protrusion member 20 may be brought into a state (protruded state) in which the distal end portion of the protrusion member 20 penetrates through the operation plate 11 to be protruded from the surface of the operation surface 11a. The protruded state is a state (first state) in which the distal end portion of the protrusion member 20 is above the operation surface 11a along the advancing/retracting operation direction Z.

When the speed of vibration to the retraction direction side is lower than the speed of vibration to the protrusion direction side, on the other hand, the protrusion member 20 is moved to the retraction direction side. That is, the protrusion member 20 may be brought into a state (retracted state) in which the distal end portion of the protrusion member 20 is retracted to the back surface side with respect to the operation plate 11. The "retracted state" includes a state in which the distal end portion of the pin member 21 of the protrusion member 20 is flush with the level of the operation surface 11a. The retracted state is a state (second state) in which the distal end portion of the protrusion member 20 is at or below the operation surface 11a along the advancing/retracting operation direction Z. The protrusion member 20 is supported by a housing of the drive mechanism 30 via the coupling member 33 and the piezoelectric element 31 with the tubular member 22 and the coupling member 33 slidable with respect to each other. This allows the protrusion member 20 to be supported so as to be depressible to a position corresponding to the retracted state (second state) by a depression operation performed from the outside, irrespective of vibration of the piezoelectric element 31.

In this embodiment, the drive mechanism 30 is formed by the piezoelectric element 31 and the slide mechanism 32. The drive mechanism 30 is drivably controlled by the protrusion control section 52 included in the operation input computation section 50. The plurality of protrusion members 20 can be independently moved between the protruded state and the retracted state by the drive mechanism 30. The operation input device 4 according to this embodiment thus includes a combination of the touch pad 10 and the plurality of protrusion members 20 provided so as to freely appear and disappear from the operation surface 11a of the touch pad 10. In this embodiment, the elevation formation device 35 is formed by the protrusion members 20 and the drive mechanism 30. Thus, the operation input device 4 according to this embodiment may also be said to include a combination of the touch pad 10 and the elevation formation device 35 capable of forming the elevated portion U on the operation surface 11a of the touch pad 10.

A configuration including a combination of the touch pad 10 of the capacitance type and the drive mechanism 30 which uses the piezoelectric element 31 as in this embodiment is particularly preferable. The touch pad 10 of the capacitance type detects the position of the object to be sensed D on the operation surface 11a on the basis of variations in capacitance between the operation surface 11a and the object to be sensed D such as a fingertip of the user. In the case where the touch pad 10 of the capacitance type is provided and the drive mechanism 30 which uses an actuator other than the piezoelectric element 31 (such as a motor or a solenoid, for example), noise can be caused along with drive of the actuator to vary the capacitance. As a result, the accuracy in detecting the position of the object to be sensed D on the touch pad 10 can be reduced. If the actuator of the drive mechanism 30 is the piezoelectric element 31 as in this embodiment, in contrast, noise caused along with drive of the actuator is suppressed to be very low. Therefore, the accuracy in detecting the position of the object to be sensed D on the touch pad 10 may be maintained at a high level even if the touch pad 10 is of the capacitance type.

### 1-3. Configuration of Operation Input System

As shown in FIG. 3, the operation input system 3 includes the operation input device 4 discussed above, the display input device 40, and the control device 5 (operation input computation section 50) interposed between the operation input device 4 and the display input device 40. In this embodiment, the control device 5 includes hardware common to a control device for the navigation apparatus 1. In addition, the operation input computation section 50 is provided in the control device 5 as a functional section separate from the navigation computation section 70 (see FIG. 2). It should be noted, however, that the present invention is not limited to such a configuration, and that the operation input computation section 50 and the navigation computation section 70 may be provided as a common functional section (control computation section). The control device 5 for the operation input system 3 and the control device for the navigation apparatus 1 may include separate pieces of hardware. The operation input device 4 and the display input device 40 are communicably connected to each other via the control device 5 (operation input computation section 50).

The operation input computation section 50 includes a status determination section 51, the protrusion control section 52, a position sensing section 53, a depiction control section 54, and a select operation determination section 55. In this embodiment, in addition, the operation input computation section 50 further includes a state sensing section 56 and an input reception section 57.

The status determination section 51 determines a protrusion status representing the state of protrusion of each of the protrusion members 20 in accordance with the display content (image content) displayed on the display screen 41. The control device 5 (operation input computation section 50) can execute a protrusion status determination process through such a function of the status determination section 51. In this embodiment, the protrusion status includes the "protruded state" and the "retracted state". The "retracted state" as one type of the protrusion status is a state in which the protrusion member 20 is at the minimally displaced position within its movable range in the advancing/retracting operation direction Z (with the distal end portion of the pin member 21 flush with the level of the operation surface 11a). The "protruded state" as the other type of the protrusion status is a state in which the protrusion member 20 is at the maximally displaced position within its movable range in the advancing/retracting operation direction Z. In this embodiment, the status determination section 51 determines which one of the protruded state and the retracted state each of the protrusion members 20 is to be brought into.

As discussed above, the display screen 41 may display an image of the operation figure 44 associated with a predetermined function besides a map image of an area around the vehicle position. For example, in this embodiment shown in FIG. 6, images of five operation figures 44 are displayed side by side in a horizontal row at equal intervals in an operation figure display region R set on the lower side on the display screen 41, and superimposed on the map image of the area around the vehicle position. Such operation figures 44 correspond to main functions for operating the navigation apparatus 1 and various accessories of the vehicle. For example, the operation figures 44 are associated with a probe traffic information display function, a vehicle position display function, a destination search function, an audio setting function, and an air conditioner setting function, sequentially in this order from the left.

The status determination section 51 acquires the position of each element forming the display content within the display screen 41 on the basis of the display content displayed on the display screen 41. The control device 5 (operation input computation section 50) can execute an element position acquisition process through such a function of the status determination section 51. In this embodiment, the elements of the display content include content elements C, functional elements F, and display elements A. The content elements C are elements forming substantial contents to be displayed. Examples of the content elements C include a map image, an image of a vehicle position mark, and an image representing a route for guidance in the case where a destination is set. The functional elements F are elements to which functions for executing various processes are set. Examples of the functional elements F include the operation figures 44 which are displayed on the display screen 41 and for which a select operation can be performed. The display elements A are elements provided to organize the elements forming the display content. Examples of the display elements A include a partition line that partitions the display screen 41.

In addition, the elements of the display content also include notification elements N, assistive elements G, and so forth. The notification elements N are elements to which functions for notifying the user of various information are set. Examples of the notification elements N include display figures that display the current time and date. The assistive elements G are elements configured to assist operation input performed by the user. Examples of the assistive elements G include the operation cursor 45. The display content displayed on the display screen 41 is formed by a combination of one or more elements including the content elements C, the functional elements F, the display elements A, the notification elements N, and the assistive elements G. In this embodiment, the elevated portion U is formed for only the operation figures 44 serving as the functional elements F, among the various elements.

The status determination section 51 acquires information on the arrangement of the operation figures 44 serving as the functional elements F on the display screen 41. In this embodiment, the status determination section 51 acquires positional information as the information on the arrangement. The status determination section 51 acquires information on the position of each operation figure 44 serving as the functional element F within the display screen 41 as coordinates on the display screen 41. The status determination section 51 correlates the coordinates of the display screen 41 and the coordinates of the operation surface 11a, and determines that the protrusion status of one or more protrusion members 20 positioned at the coordinates on the operation surface 11a corresponding to the coordinates on the display screen 41 of the operation figure 44 being displayed is the protruded state. The correlation between the coordinates of the display screen 41 and the coordinates of the operation surface 11a is established using aspect ratio information determined in advance on the basis of the shape and size of the display screen 41 and the shape and size of the operation surface 11a (information on the aspect ratio of the operation surface 11a with respect to the display screen 41). The coordinates of the operation surface 11a according to the coordinates of the display screen 41, or the coordinates of the display screen 41 according to the coordinates of the operation surface 11a, are acquired on the basis of the aspect ratio information.

In this embodiment, the status determination section 51 determines that the protrusion status of each of a pair of (two) protrusion members 20 arranged in the Y direction of the operation surface 11a for one displayed operation figure 44 is the protruded state. On the other hand, the status determination section 51 determines that the protrusion status of the protrusion members 20 positioned at the coordinates on the operation surface 11a corresponding to the coordinates on the display screen 41 of a region in which the operation figure 44 is not displayed is the retracted state. In the example of FIG. 6, images of five operation figures 44 are displayed in the operation figure display region R. Thus, it is determined that the protrusion status of five pairs of (ten) protrusion members 20 corresponding to the five operation figures 44 is the protruded state.

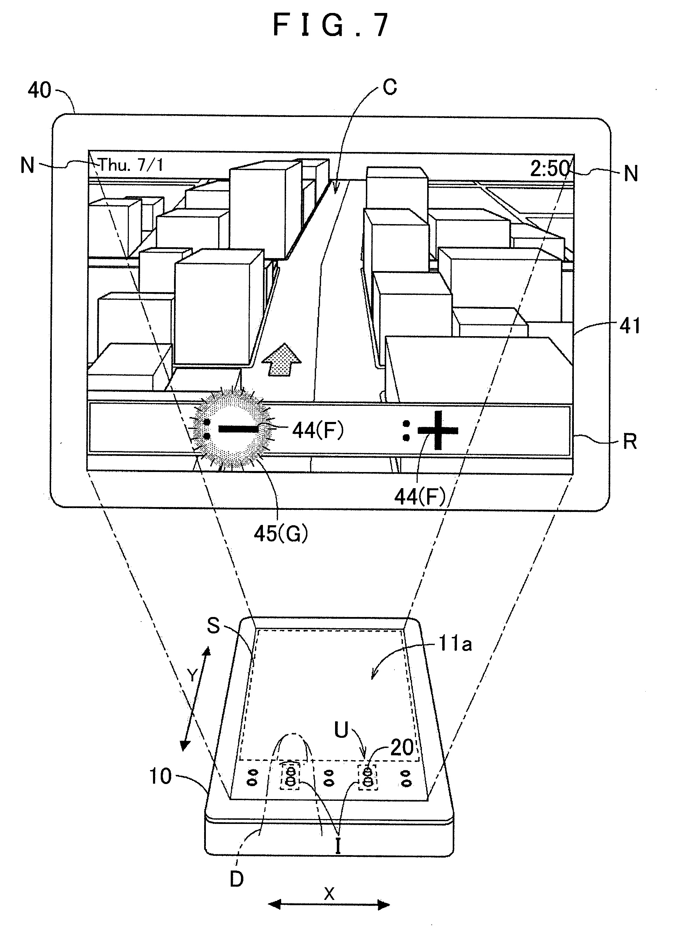

In the case where the image displayed on the display screen 41 is changed, in addition, the status determination section 51 determines a difference between the protrusion status corresponding to the image before the change and the protrusion status corresponding to the image after the change for each of the protrusion members 20. The status determination section 51 determines which one of "not changed", "transitioned to the protruded state", and "transitioned to the retracted state" is applied to each of the protrusion members 20. In the case where the operation figure 44 associated with the audio setting function is selected in FIG. 6, switching is made to a screen including images of two operation figures 44 for volume adjustment as shown by way of example in FIG. 7. In this case, among the five operation figures 44 displayed side by side, two at both ends and one at the center disappear, and the remaining two are maintained on display although the images are changed. Thus, in such a case, for example, the status determination section 51 determines that the protrusion status of each pair of (every two) protrusion members 20 arranged in the Y direction is "transitioned to the retracted state", "not changed", "transitioned to the retracted state", "not changed", and "transitioned to the retracted state", sequentially in this order along the X direction.

The status determination section 51 outputs information on the protrusion status, or the difference in protrusion status, determined for each of the protrusion members 20 to the protrusion control section 52.

The protrusion control section 52 controls the position of the protrusion member 20 with respect to the operation surface 11a in the protrusion direction (which coincides with the advancing/retracting operation direction Z). The control device 5 (operation input computation section 50) can execute a protrusion control process through such a function of the protrusion control section 52. The protrusion control section 52 controls the drive mechanism 30 on the basis of the information received from the status determination section 51. In this embodiment, the protrusion control section 52 vibrates the piezoelectric element 31 by applying a pulsed voltage. The protrusion control section 52 is configured to adjust the magnitude relationship between the speed of vibration to one side along the advancing/retracting operation direction Z and the speed of vibration to the other side. Such a configuration may be achieved by changing the duty ratio in accordance with the direction of vibration of the piezoelectric element 31. The protrusion control section 52 moves the protrusion member 20 to the protrusion direction side by making the speed of vibration to the protrusion direction side lower than the speed of vibration to the retraction direction side. On the other hand, the protrusion control section 52 moves the protrusion member 20 to the retraction direction side by making the speed of vibration to the retraction direction side lower than the speed of vibration to the protrusion direction side.

As discussed above, the results of the determination performed by the status determination section 51 are based on the display content displayed on the display screen 41 (in this embodiment, whether or not the operation figure 44 serving as the functional element F is displayed at a predetermined position of the display screen 41). Therefore, by controlling the drive mechanism 30 (elevation formation device 35) on the basis of the determination results, the protrusion control section 52 brings the protrusion member 20 at a position on the operation surface 11a corresponding to the position within the display screen 41 of each element (in this embodiment, each operation figure 44) forming the display content displayed on the display screen 41 into the protruded state (see FIGS. 6 and 7). That is, in the case where a particular operation figure 44 is displayed on the display screen 41, the protrusion control section 52 brings the protrusion member 20 positioned at the coordinates on the operation surface 11a corresponding to the coordinates of the operation figure 44 into the protruded state. In this embodiment, a pair of (two) protrusion members 20 are brought into the protruded state for one operation figure 44. That is, the protrusion control section 52 expresses each operation figure 44 as the elevated portion U represented in the form of two protrusion portions arranged side by side in the Y direction of the operation surface 11a.

In addition, the protrusion control section 52 brings the protrusion members 20 positioned at the coordinates on the operation surface 11a corresponding to the coordinates on the display screen 41 of a region in which the operation figure 44 is not displayed into the retracted state (see FIG. 7). In this way, the protrusion control section 52 brings only the protrusion members 20 corresponding to a particular operation figure 44 displayed on the display screen 41 into the protruded state. That is, the control device 5 (operation input computation section 50) forms the elevated portion U by protruding the distal end portions of the protrusion members 20 from the operation surface 11a at particular positions of the operation surface 11a corresponding to the display content on the display screen 41 by controlling the drive mechanism 30 (elevation formation device 35). Then, individual elevated portions U are gathered to form an elevated shape on the operation surface 11a as a whole. The "elevated shape" is a concept expressed with reference to the height of the operation surface 11 a. In the case where a height that is higher than the operation surface 11a and that is less than the maximally displaced position of the protrusion member 20 is considered as a reference, for example, the expression "undulating shape" may also be used. Further, in the case where the elevated portion U is formed by the protrusion member 20 with its distal end portion protruding from the operation surface 11a as in this embodiment, the expression "concave-convex shape" may also be used. In the case where the results of the determination performed by the status determination section 51 is obtained as the difference in protrusion status, the protrusion control section 52 maintains each of the protrusion members 20 in the protruded state or the retracted state, or switches each of the protrusion members 20 between the protruded state and the retracted state, on the basis of the determination results. That is, the control device 5 (operation input computation section 50) maintains the existing elevated portion U or causes the existing elevated portion U to disappear, or form a new elevated portion U as necessary.

The protrusion control section 52 vibrates the piezoelectric element 31 for a predetermined time longer than the time required to switch the protrusion member 20 between the protruded state and the retracted state, and thereafter stops the vibration. That is, a voltage is applied to the piezoelectric element 31 only for the predetermined time, and thereafter application of the voltage is stopped. Even after application of the voltage is stopped, the protrusion member 20 maintains its position in the advancing/retracting operation direction Z through static friction between the coupling member 33 and the tubular member 22. After application of the voltage is stopped, the protrusion member 20 which has been brought into the protruded state may be depressed along the advancing/retracting operation direction Z to a position corresponding to the retracted state by a depression operation performed from the outside.

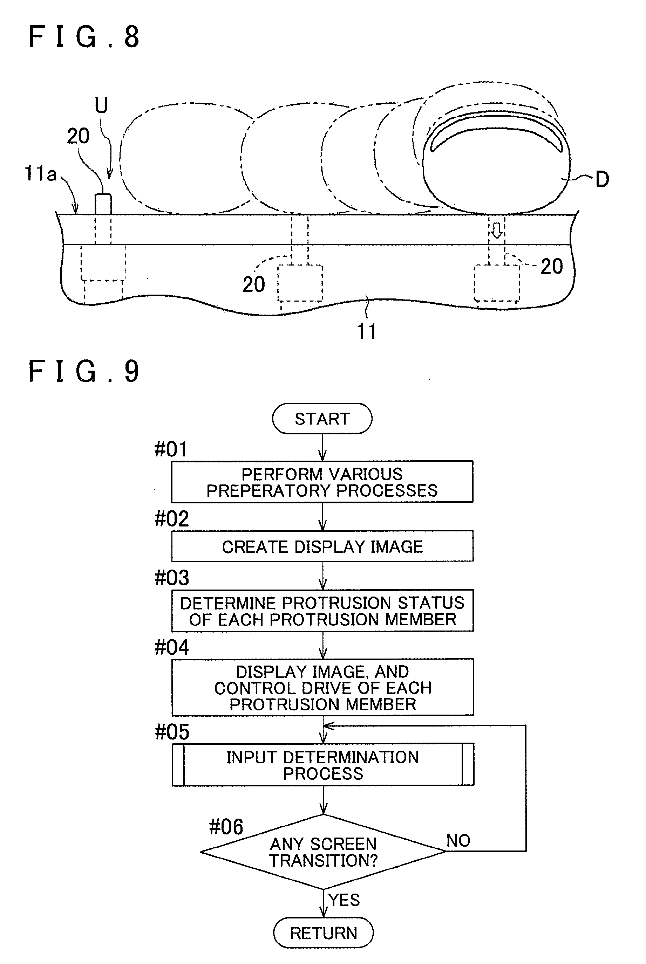

In this embodiment, the protrusion height of the protrusion member 20 which is brought into the protruded state (height of the distal end portion of the protrusion member 20 with reference to the operation surface 11a) is set to be relatively small. In the case where the object to be sensed D is a fingertip of the user as shown in FIG. 8, for example, the protrusion height may be so small that the difference in height can be absorbed by the flexibility of the ball of a finger intrinsic to a living body when the user slides (drags) his/her finger along the operation surface 11a. For example, the protrusion height may be equal to or less than 20% of the thickness of a fingertip. As a matter of course, the protrusion height may be more than that.

In this embodiment, a drag operation reception region S (see FIG. 6) is set on the operation surface 11a in correspondence with a region of the display screen 41 other than an operation figure display region R (a main display region which mainly occupies an upper part of the display screen 41 and in which the content elements C such as a map image are displayed). The drag operation reception region S is set in a part of the operation surface 11a on the farther side as seen from the user (in this embodiment, forward in the travel direction) in correspondence with the main display region of the display screen 41. In the drag operation reception region S, a drag operation performed on the operation surface 11a is preferentially received. In this embodiment, the protrusion control section 52 brings all the protrusion members 20 provided in the drag operation reception region S into the retracted state. For example, in the case where the content element C such as a map image or the notification element N such as a display figure indicating the current time is displayed in the main display region of the display screen 41, the protrusion control section 52 brings the corresponding protrusion members 20 into the retracted state rather than the protruded state. This allows the control device 5 (operation input computation section 50) to form the elevated portion U only in a part of the operation surface 11a on the closer side as seen from the user other than the drag operation reception region S.

The position sensing section 53 acquires a sensed position of the object to be sensed D on the operation surface 11a of the touch pad 10. The control device 5 (operation input computation section 50) can execute a position sensing process through such a function of the position sensing section 53. The position sensing section 53 specifies the position of an electrode most approached by the object to be sensed D on the basis of variations in capacitance of the electrodes caused when the object to be sensed D such as a fingertip is brought into contact with or into proximity to the operation surface 11a. Then, the position sensing section 53 acquires the specified position of the electrode as the sensed position on the operation surface 11a. The touch pad 10 may receive input corresponding to the sensed position on the operation surface 11a through such a function of the position sensing section 53. The position sensing section 53 outputs information on the acquired sensed position to the depiction control section 54 and the select operation determination section 55.

The depiction control section 54 controls depiction of an image to be displayed on the display screen 41. The control device 5 (operation input computation section 50) can execute a depiction control process through such a function of the depiction control section 54. The depiction control section 54 generates a plurality of layers containing images of a background, roads, names of places, etc. around the vehicle position to generate the content elements C. In addition, the depiction control section 54 generates a layer containing an image of a vehicle position mark representing the vehicle position, and a layer containing an image of a route for guidance to a destination in the case where such a destination is set, to generate the content elements C. Further, the depiction control section 54 generates a layer containing images of the predetermined operation figures 44 and display figures, and a layer containing an image of the predetermined operation cursor 45, to generate the functional elements F, the notification elements N, and the assistive elements G. Then, the depiction control section 54 superimposes the generated layers to generate a single display image (combines the generated elements to generate a display content), and causes the display screen 41 to display the generated image.

The depiction control section 54 causes the main operation figures 44 to be displayed in the operation figure display region R set in the display screen 41 (see FIG. 6). The types of the operation figures 44 to be displayed may differ depending on a request from the user, the running state of the vehicle, or the like. The depiction control section 54 appropriately displays and hides the various types of the operation figures 44 depending on the situation.

In addition, the depiction control section 54 appropriately displays and hides the operation cursor 45 in accordance with a request from the user. In this embodiment, in the case where the position sensing section 53 does not sense contact of the object to be sensed D with or proximity of the object to be sensed D to the operation surface 11a, the depiction control section 54 hides the operation cursor 45. In the case where the position sensing section 53 senses contact of the object to be sensed D with or proximity of the obj ect to be sensed D to the operation surface 11a, on the other hand, the depiction control section 54 displays the operation cursor 45, which has a circular shape in this embodiment, at a position on the display screen 41 corresponding to the sensed position on the operation surface 11a. In this embodiment, the operation cursor 45 is displayed such that the sensed position and the center position of the operation cursor 45 coincide with each other. In the case where the user performs a drag operation to slide the object to be sensed D in contact with the operation surface 11a and also slide the sensed position, for example, the operation cursor 45 being displayed is also moved on the display screen 41 synchronously.

The select operation determination section 55 determines whether or not a select operation is performed for the operation figure 44 displayed on the display screen 41. The control device 5 (operation input computation section 50) can execute a select operation determination process through such a function of the select operation determination section 55. The select operation determination section 55 determines whether or not a select operation is performed for the operation figure 44 serving as the functional element F on the basis of a predetermined operation performed on the operation surface 11a. In addition, the select operation determination section 55 determines whether or not a select operation is performed for the operation figure 44 on the basis of whether or not a depression operation is performed on the elevated portion U corresponding to the operation figure 44. In the case where such a depression operation is detected, the select operation determination section 55 receives input of a select operation for the operation figure 44. More specifically, in the case where the predetermined operation is sensed in a predetermined region including the position of the protrusion member 20 in the protruded state, the select operation determination section 55 determines that a select operation for the operation figure 44 corresponding to the protrusion members 20 has been performed.

In this embodiment, two protrusion members 20 are assigned to one operation figure 44', and the pair of (two) protrusion members 20 have the same protrusion status at all times. Thus, one operation figure assignment region I (see FIG. 4) containing the positions of the pair of (two) protrusion members 20 is set as the "predetermined region" for the pair of (two) protrusion members 20. It should be noted that operation figure assignment regions I corresponding to pairs of protrusion members 20 that are adjacent in the X direction of the operation surface 11a are set so as not to overlap each other. In this embodiment, the operation figure assignment region I corresponds to the "input reception region" according to the present invention. Examples of the "predetermined operation" for determination include an operation of bringing the object to be sensed D, which has not been in contact with the operation surface 11a, into contact with the operation surface 11a (touch operation), an operation of temporarily moving the object to be sensed D, which has been in contact with the operation surface 11a, away from the operation surface 11a and thereafter bringing the object to be sensed D into contact with the operation surface 11a again (tap operation), and an operation of performing two tap operations within a predetermined time (double-tap operation).

In this embodiment, as discussed above, the control device 5 (operation input computation section 50) controls the display content to be displayed on the display screen 41, decides the position of the elevated portion U on the operation surface 11a in accordance with the display content, and forms the elevated portion U at the decided position. That is, the coordinates of the display screen 41 and the coordinates of the operation surface 11a are correlated with each other, and only the protrusion members 20 corresponding to a particular operation figure 44 displayed on the display screen 41 are brought into the protruded state to form the elevated portion U. When the protrusion members 20 are in the retracted state, a portion of the operation surface 11a around the protrusion members 20 is flat. When the protrusion members 20 are in the protruded state, in contrast, the distal end portions of the protrusion members 20 are distinctly elevated (protruded) from the operation surface 11a to provide the user with an operation feel that utilizes tactile sensation. In the case where the elevated portion U is formed by the distal end portions of the protrusion members 20 as in this embodiment, in particular, the user may directly recognize the difference in height through tactile sensation using a fingertip or the like. In addition, the user may easily associate the position of the elevated portion U on the operation surface 11a recognized through tactile sensation and the position of the operation figure 44 displayed on the display screen 41 with each other through comparison performed in his/her mind. The user may further perform a touch operation or the like at a desired position on the operation surface 11a in reliance on the elevated portion U recognized through tactile sensation at that position. This allows the user to easily select the desired operation figure 44 without seeing the touch pad 10 provided close to the hand of the user as a matter of course, or even with hardly seeing the display input device 40 provided at a position close to the viewing direction during drive. Thus, the operation input device 4 and the operation input system 3 according to this embodiment allow to perform reliable operation input compared to the related art without the need to closely watch the display screen 41.

In this embodiment, in addition, the control device 5 (operation input computation section 50) forms the elevated portion U only in a region of the operation surface 11a other than the drag operation reception region S, and does not form the elevated portion U in the drag operation reception region S. That is, all the protrusion members 20 provided in the drag operation reception region S are brought into the retracted state. When the protrusion members 20 are in the retracted state, the distal end portions of the protrusion members 20 are flush with the operation surface 11a of the touch pad 10, which makes the operation surface 11a flat. Thus, an operation performed on the touch pad 10 (a drag operation performed on the operation surface 11a) by the user is not impeded. Hence, by bringing all the protrusion members 20 provided in the drag operation reception region S into the retracted state as in this embodiment, the user may smoothly perform operation input to the operation surface 11a without being hindered by the protrusion members 20. In addition, by bringing the protrusion members 20 provided in a region other than the drag operation reception region S into the retracted state in the case where the operation figure 44 is not displayed on the display screen 41, the user may likewise smoothly perform operation input to the operation surface 11a. By controlling the protrusion members 20 so as to be advanced and retracted between the protruded state and the retracted state as described above, it is possible to provide an operation feel that utilizes tactile sensation without impairing the operation feel of the touch pad 10.

In this embodiment, in addition, each of the operation figures 44 displayed on the display screen 41 is expressed as the elevated portion U represented in the form of two protrusion portions arranged side by side by a pair of (two) protrusion members 20. Therefore, the user may easily grasp the position of the operation figure assignment region I on the operation surface 11a by recognizing the two points at the same location through tactile sensation.

In the case where it is determined that a select operation for the operation figure 44 has been performed, the select operation determination section 55 outputs information representing the select operation to the navigation computation section 70 etc. to achieve a function associated with the selected operation figure 44. The select operation determination section 55 also outputs the information to the status determination section 51 and the depiction control section 54. Thus, in the case where the image displayed on the display screen 41 is changed in accordance with the function to be achieved next, the display image is updated, and the difference in protrusion status of each protrusion member 20 is determined accordingly.

The state sensing section 56 senses the protruded state and the retracted state of the protrusion members 20. The control device 5 (operation input computation section 50) can execute a state sensing process through such a function of the state sensing section 56. The state sensing section 56 is configured to acquire information from a position sensor (not shown), for example. The state sensing section 56 senses whether the actual protrusion status of each protrusion member 20 is the protruded state or the retracted state on the basis of the acquired information on the position of the protrusion member 20 in the advancing/retracting operation direction Z. The state sensing section 56 outputs information on the sensing results to the input reception section 57 of the select operation determination section 55.

In the case where the state sensing section 56 senses that the protrusion member 20 has been changed from the protruded state to the retracted state, the input reception section 57 receives input to the protrusion member 20. The control device 5 (operation input computation section 50) can execute an input reception process through such a function of the input reception section 57. In this embodiment, as described above, the protrusion members 20 corresponding to a particular operation figure 44 displayed on the display screen 41 have been brought into the protruded state. Therefore, receiving input to the protrusion member 20 is equivalent to receiving input to the operation figure 44 corresponding to the protrusion member 20. That is, in the case where it is sensed that the protrusion member 20 has been changed from the protruded state to the retracted state, the input reception section 57 receives input to the operation figure 44 corresponding to the protrusion member 20. The select operation determination section 55 determines on the basis of the received input that a select operation has been performed for the operation figure 44 corresponding to the protrusion member 20.

In this embodiment, in which the thus configured input reception section 57 is provided, a select operation for the operation figure 44 may be received via the protrusion member 20, besides a normal select operation received on the basis of a touch operation or the like on the touch pad 10. In this event, the user may select the desired operation figure 44 by recognizing through tactile sensation a target protrusion member 20 in the protruded state through a drag operation performed on the operation surface 11a using the object to be sensed D such as a fingertip and thereafter depressing the protrusion member 20 into the retracted state as shown in FIG. 8. That is, the user may select the operation figure 44 through an intuitive operation of taking the protrusion member 20 in the protruded state as a button and depressing the simulated button. Thus, the operation input device 4 and the operation input system 3 according to this embodiment allow to perform operation input in a highly convenient manner.

In the example of a display image switching process described with reference to FIGS. 6 and 7, in the case where the operation figure 44 associated with the audio setting function is selected through a predetermined operation (for example, a double-tap operation) performed on the operation surface 11a of the touch pad 10, only switching is made to a screen including images of two operation figures 44 for volume adjustment (see FIG. 7). In the case where the operation figure 44 associated with the audio setting function is selected through a depression operation performed on the protrusion member 22, meanwhile, screen switching is made in the same manner as described above, and the protrusion member 20 which has been brought into the retracted state through the depression operation is transitioned to the protruded state again.

### 1-4. Process Procedures of Operation Input Reception Process

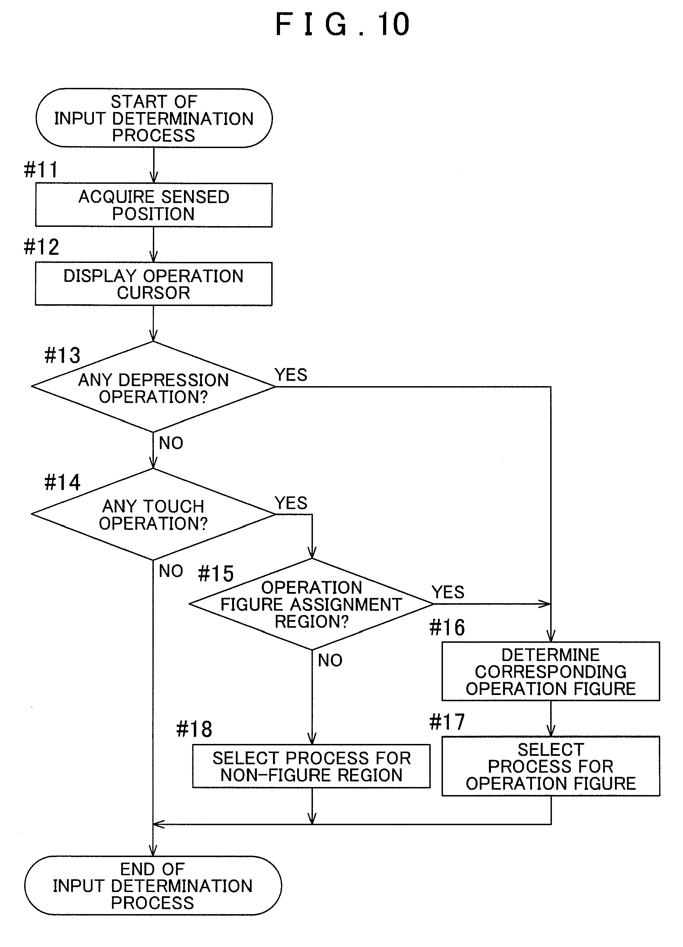

The process procedures of the operation input reception process performed by the operation input system 3 according to this embodiment will be described with reference to FIGS. 9 and 10. The procedures of the operation input reception process described below are executed by hardware or software (a program) implementing the functional sections of the operation input computation section 50, or a combination of both. In the case where the functional sections are implemented by a program, the arithmetic processing unit provided in the operation input computation section 50 operates as a computer that executes the program implementing the functional sections.

In the operation input reception process, as shown in FIG. 9, first, various preparatory processes are executed (step #01). Examples of the preparatory processes include preparing a work area for creating a display image. Next, a display image is actually created (step #02). The protrusion status of each protrusion member 20 is determined (step #03). The determination results are set in the form of ON/OFF, for example. Next, an image is displayed on the display screen 41 and the drive mechanism 30 drives the protrusion member 20 so as to be advanced and retracted (step #04) on the basis of the display image created in step #02 and the protrusion status determined in step #03. This causes the protrusion members 20 corresponding to a particular operation figure 44 displayed on the display screen 41 to be brought into the protruded state. The protrusion members 20 corresponding to the operation figures 44 which are not displayed are brought into the retracted state. An input determination process is executed in this state (step #05).

In the input determination process, as shown in FIG. 10, a sensed position of the object to be sensed D on the operation surface 11a is acquired (step #11). The operation cursor 45 is displayed at a position on the display screen 41 corresponding to the acquired sensed position (step #12). In the case where the sensed position of the object to be sensed D is moved on the operation surface 11a, the operation cursor 45 being displayed is also moved on the display screen 41 accordingly. After that, it is determined whether or not an operation (depression operation) is performed to forcibly transition the protrusion member 20 which has been in the protruded state into the retracted state (step #13). In the case where it is determined that such a depression operation is not performed (step #13: No), it is determined whether or not a touch operation (including a tap operation and a double-tap operation) is performed on the operation surface 11a (step #14). In the case where it is determined that such a touch operation is not performed (step #14: No), the input determination process is terminated.

In the case where a touch operation is sensed in step #14 (step #14: Yes), it is determined whether or not the position at which the touch operation is sensed falls within the operation figure assignment region I (step #15). In the case where it is determined that the sensed position falls within the operation figure assignment region I (step #15: Yes) or in the case where it is determined in step #13 that a depression operation for the protrusion member 20 has been sensed (step #13: Yes), the type of the operation figure 44 corresponding to the operation figure assignment region I or the protrusion member 20 which has been subjected to the depression operation is determined (step #16). Then, the operation figure 44 is selected, and the function associated with the operation figure 44 (such as a destination search function or an audio setting function, for example) is achieved (step #17). In this case, there may be a case where a plurality of operation figures 44 are selected and it is difficult to determine which operation figure 44 is selected. In such a case, the likelihood of the selection (the estimated degree of coincidence of the selection with the intention of the user) may be determined on the basis of at least one of the number of the protrusion members 20 which have been subjected to the depression operation and the sensed position of the object to be sensed D to decide the selected operation figure 44. After that, the input determination process is terminated. In the case where it is determined in step #15 that the sensed position does not fall within the operation figure assignment region I (step #15: No), a selection process is executed for a region (non-figure region) other than the operation figure assignment region I (step #18). For example, a process for scrolling a map image with the position at which the touch operation is sensed centered in the display screen 41 is executed. The input determination process is thus terminated.

When the input determination process is terminated, the process returns to FIG. 9, and it is determined whether or not the image displayed on the display screen 41 is changed (step #06). In the case where no depression operation or touch operation is sensed in the input determination process, a screen transition is not likely to be performed. In such a case (step #06: No), the input determination process is executed again. In the case where the operation figure 44 is selected as a result of the input determination process, a process for scrolling the map image is executed, or the like, meanwhile, a screen transition may be performed. In such a case (step #06: Yes), the operation input reception process is terminated. The processes in step #01 and the subsequent steps are executed again on the display image after the change. The processes described above are repeatedly successively executed.

### 2. Second Embodiment

An input system according to a second embodiment of the present invention will be described with reference to the drawings. In this embodiment, the elevated portion U is formed for the operation figure 44 serving as the functional elements F and a partition line 47 serving as the display element A, among the various elements forming the display content. The differences between the second embodiment and the first embodiment described above will be mainly described below. The same points as those in the first embodiment described above will not be specifically described.

### 2-1. Configuration of Operation Input System

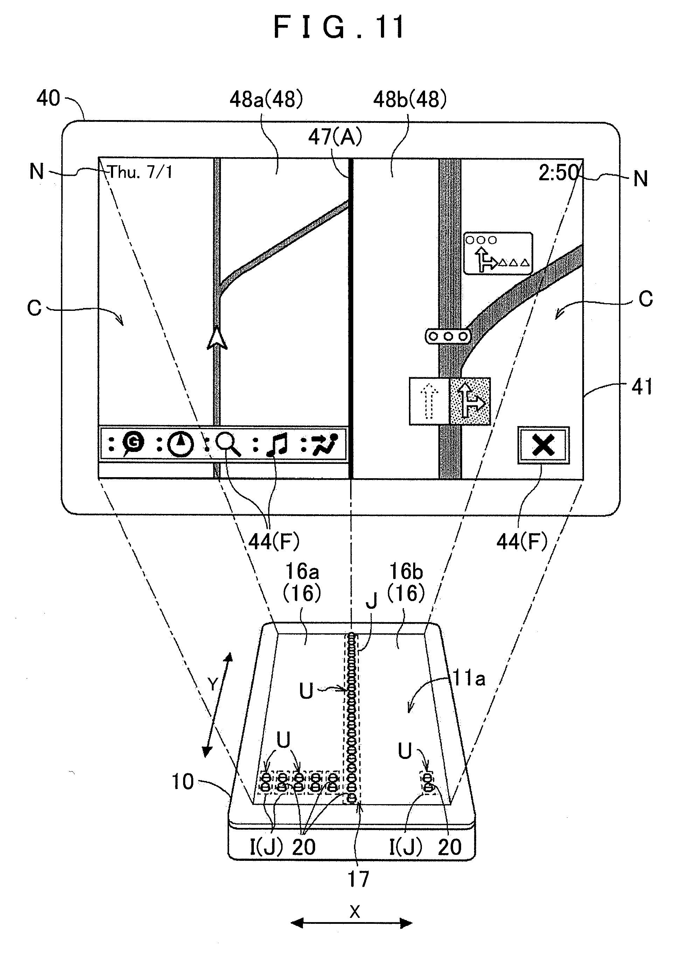

In this embodiment, the display screen 41 is divided into a plurality of screen regions 48 that display independent display contents. In the example shown in FIG. 11, the display screen 41 is divided into two screen regions 48 (a first screen region 48a and a second screen region 48b) of the same area that are adjacent to each other in the left-right direction. One straight partition line 47 is defined at the center of the display screen 41 in the left-right direction, between the first screen region 48a and the second screen region 48b. In the first screen region 48a on the left side of the display screen 41, a map image including a vehicle position mark is displayed, and five operation figure 44 that are similar to those in FIG. 6 are displayed. In the second screen region 48b on the right side, meanwhile, an enlarged map image of an area around the vehicle position is displayed, and one operation figure 44 is displayed. The operation figure 44 in the second screen region 48b is associated with a function for canceling the enlarged map being displayed (enlarged map cancellation function).

The status determination section 51 acquires the position of each element forming the display content within the display screen 41 on the basis of the display content displayed on the display screen 41. The control device 5 (operation input computation section 50) can execute an element position acquisition process through such a function of the status determination section 51. The status determination section 51 acquires information on the position of the partition line 47 serving as the functional element A within the display screen 41 as coordinates on the display screen 41. In addition, the status determination section 51 acquires information on the position of each operation figure 44 serving as the functional element F within the display screen 41 as coordinates on the display screen 41. The status determination section 51 correlates the coordinates of the display screen 41 and the coordinates of the operation surface 11a, and determines that the protrusion status of one or more protrusion members 20 positioned at the coordinates on the operation surface 11a corresponding to the coordinates on the display screen 41 of the partition line 47 and the operation figures 44 being displayed is the protruded state.

In the example of FIG. 11, the partition line 47 is displayed at the center of the display screen 41 in the left-right direction. Thus, it is determined that the protrusion status of a plurality of protrusion members 20 arranged in a row at the center of the operation surface 11a in the left-right direction is the protruded state. In addition, images of five operation figures 44 are displayed in the first screen region 48a, and an image of one operation figure 44 is displayed in the second screen region 48b. Thus, it is determined that the protrusion status of a total of six pairs of (twelve) protrusion members 20 corresponding to the six operation figures 44 is the protruded state.

The protrusion control section 52 controls the drive mechanism 30 on the basis of the information received from the status determination section 51. Consequently, the protrusion control section 52 brings the protrusion member 20 at a position on the operation surface 11a corresponding to the position within the display screen 41 of each element (in this embodiment, the partition line 47 and the operation figures 44) forming the display content displayed on the display screen 41 into the protruded state. That is, the protrusion control section 52 brings the protrusion members 20 positioned at the coordinates on the operation surface 11a corresponding to the coordinates on the display screen 41 of the partition line 47 into the protruded state. The protrusion control section 52 expresses one partition line 47, which is represented as a straight line in this embodiment, as the elevated portion U represented in the form of protrusion portions arranged in a straight row in the Y direction of the operation surface 11 a. The group of elevated portions U forms a boundary 17 on the operation surface 11a corresponding to the partition line 47 on the display screen 41. The boundary 17 divides the operation surface 11a into two operation surface regions 16 (a first operation surface region 16a and a second operation surface region 16b) of the same area that are adjacent to each other in the left-right direction. The boundary 17 is formed at the center of the operation surface 11a in the left-right direction. If the position of the partition line 47 on the display screen 41 is changed, the position of the elevated portion U (boundary 17) on the operation surface 11a is accordingly changed.

In this embodiment, operation input is received in each of the two operation surface regions 16 (the first operation surface region 16a and the second operation surface region 16b) separated by the elevated portion U (boundary 17) corresponding to the partition line 47 on the display screen 41. In this case, the protrusion control section 52 brings the protrusion members 20 positioned at the coordinates on the operation surface 11a corresponding to the coordinates of the operation figures 44 displayed in each screen region 48 into the protruded state. The protrusion control section 52 expresses each operation figure 44 as the elevated portion U represented in the form of two protrusion portions arranged side by side in the Y direction of the operation surface 11a. In this embodiment, the elevated portion U is formed at respective positions such that the relative position of each operation figure 44 in each screen region 48 and the relative position of each elevated portion U in the corresponding operation surface region 16 match each other. The relative positions of each operation figure 44 in each screen region 48, or the relative positions of the partition line 47, and so forth in each screen region 48 may be acquired by defining the upper left vertex of the display screen 41 as a reference point, virtually setting an X axis extending rightward along the upper side of the display screen 41 from the reference point and a Y axis extending downward along the left side of the display screen 41 from the reference point, and the position of each operation figure 44 in each screen region 48 can be obtained as coordinates in the X-Y plane.

An input reception region J is set around the protrusion members 20 forming the elevated portion U to contain the protrusion members 20. In this embodiment, one input reception region J is set around a group of protrusion members 20 forming the elevated portion U related to the boundary 17 to contain the protrusion members 20 altogether. The input reception region J set around a pair of (two) protrusion members 20 forming the elevated portion U corresponding to each operation figure 44 may be the same as the operation figure assignment region I in the first embodiment described above. That is, the input reception region J corresponding to the partition line 47 and the input reception regions J (that is, the operation figure assignment regions I) corresponding to the operation figures 44 are set on the operation surface 11a.

In this embodiment, in the case where contact of the object to be sensed D with the input reception region J (operation figure assignment region I) is detected, the select operation determination section 55 detects a depression operation for the protrusion member 20 provided in the input reception region J (operation figure assignment region I). When a depression operation for the protrusion member 20 is detected, the select operation determination section 55 determines an element of the display content corresponding to the protrusion member 20 on the basis of the position (coordinates) within the operation surface 11a of the protrusion member 20 which has been subjected to the depression operation. The select operation determination section 55 determines which of at least the functional element F (operation figure 44) and the display element A (partition line 47) the element of the display content corresponding to the protrusion member 20 which has been subjected to the depression operation is. Then, in the case where it is determined that the element is the functional element (operation figure 44), operation input to the functional element F (operation figure 44) is received. That is, in the case where a depression operation for the elevated portion U corresponding to the operation figure 44 is detected through detection of the object to be sensed D in the operation figure assignment region I, the control device 5 (operation input computation section 50) receives input of a select operation for the operation figure 44.

In the case where the element of the display content corresponding to the protrusion member 20 which has been subjected to the depression operation is the display element A (partition line 47), on the other hand, a restoration process is executed. As discussed above, the display elements A are elements provided to organize the elements forming the display content. Unlike the functional elements F (operation figures 44), depressing the elevated portion U corresponding to the display element A does not cause execution of any process. However, the elevated portion U corresponding to such a display element A (partition line 47) is preferably formed appropriately in order to clarify the correspondence between each screen region 48 and each operation surface region 16. Thus, in the case where a depression operation for the elevated portion U corresponding to the partition line 47 is detected through detection of the object to be sensed D in the input reception region J, the control device 5 (operation input computation section 50) executes a restoration process for restoring the elevated portion U. Specifically, the control device 5 (operation input computation section 50) sets the protrusion status of the protrusion member 20 which has been depressed to the protruded state again, and controls the drive mechanism 30 (elevation formation device 35) so as to form the elevated portion U at that position again.

### 2-2. Process Procedures of Operation Input Reception Process

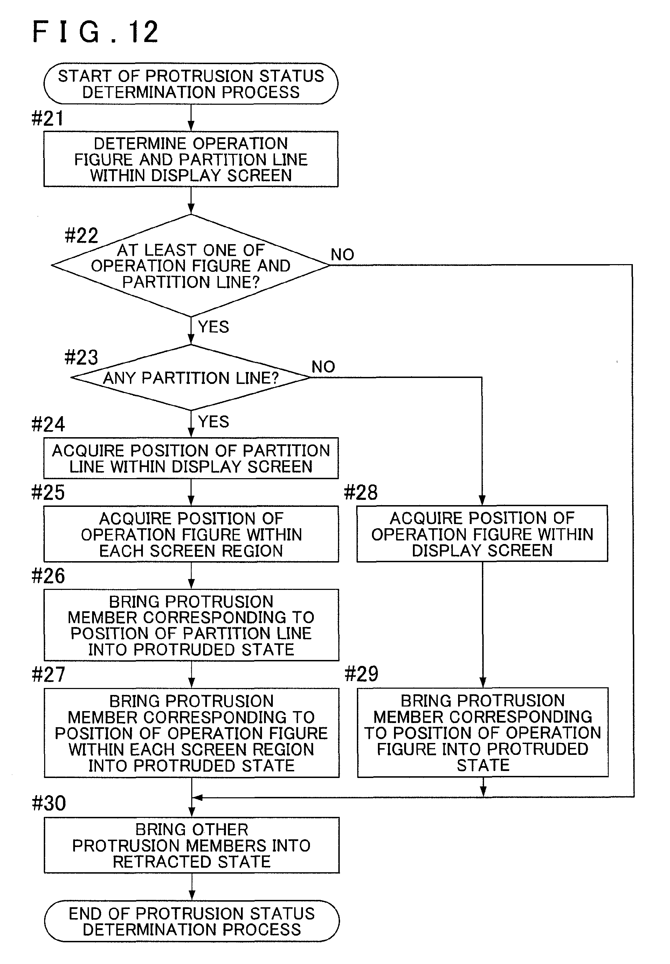

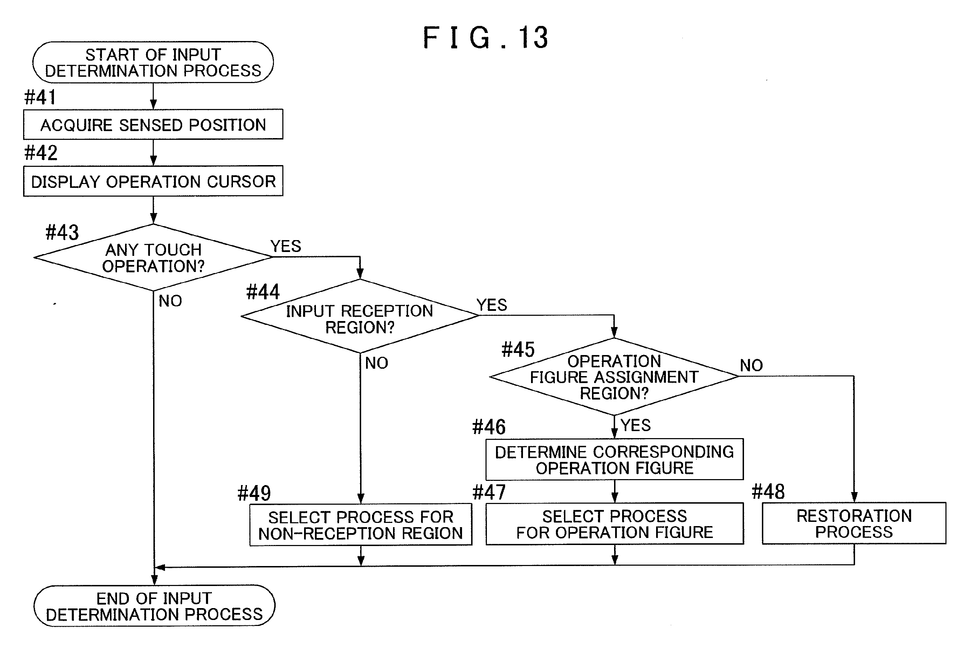

The process procedures of the operation input reception process performed by the operation input system 3 according to this embodiment will be described with reference to FIGS. 12 and 13. In this embodiment, in consideration of the fact that the elevated portion U is formed for a plurality of types of elements, specifically the functional element F (operation figure 44) and the display element A (partition line 47), the process in step #03 in the operation input reception process (see FIG. 9) according to the first embodiment described above is designed in more detail. Accordingly, the content of the input determination process partly differs from that according to the first embodiment described above. The process will be described below sequentially.

In the protrusion status determination process, as shown in FIG. 12, the operation figure 44 and the partition line 47 within the display screen 41 are determined (step #21), and it is determined whether or not at least one of the operation figure 44 and the partition line 47 is included in the display screen 41 (step #22). In the case where any of the operation figure 44 and the partition line 47 is included (step #22: Yes), it is determined whether or not the partition line 47 is included in the display screen 41 (step #23). In the case where the partition line 47 is included (step #23: Yes), the position (coordinates) of the partition line 47 within the display screen 41 is acquired (step #24), and the position of the operation figure 44 within each of the screen regions 48 separated by the partition line 47 is acquired (step #25). Then, the protrusion status of the protrusion member 20 at a position on the operation surface 11a corresponding to the position of the partition line 47 within the display screen 41 is brought into the protruded state (step #26). In addition, the protrusion status of the protrusion member 20 at a position in the operation surface region 16 corresponding to the position of the operation figure 44 within each screen region 48 is brought into the protruded state (step #27).

In the case where it is determined in step #23 that the partition line 47 is not included but only the operation figure 44 is included (step #23: No), the position (coordinates) of the operation figure 44 within the display screen 41 is acquired (step #28). Then, the protrusion status of the protrusion member 20 at a position on the operation surface 11a corresponding to the position of the operation figure 44 within the display screen 41 is brought into the protruded state (step #29). Lastly, the protrusion status of the other protrusion members 20 is brought into the retracted state (step #30). In the case where no partition line 44 or partition line 47 is included in the determination in step #22 (step #22: No), the protrusion status of all the protrusion members 20 is brought into the retracted state in step #30.

The given flowchart is a simplified version, and in the case where only the partition line 47, of the operation *figure 44* and the partition line 47, is displayed on the display screen 41, the processes in step #25 and step #27 are omitted.

In this embodiment, the input determination process is performed only on the basis of a touch operation performed on the operation surface 11a. A depression operation for the protrusion member 20 is determined on the basis of such a touch operation. In the input determination process, as shown in FIG. 13, a sensed position of the object to be sensed D on the operation surface 11a is acquired (step #41). The operation cursor 45 is displayed at a position on the display screen 41 corresponding to the acquired sensed position (step #42). In the case where the sensed position of the object to be sensed D is moved on the operation surface 11a, the operation cursor 45 being displayed is also moved on the display screen 41 accordingly. After that, it is determined whether or not a touch operation (including a tap operation and a double-tap operation) is performed on the operation surface 11a (step #43). In the case where it is determined that such a touch operation is not performed (step #43: No), the input determination process is terminated.

In the case where a touch operation is sensed in step #43 (step #43: Yes), it is determined whether or not the position at which the touch operation is sensed falls within the input reception region J (including the operation figure assignment region I) (step #44). In the case where it is determined that the sensed position falls within the input reception region J (step #44: Yes), it is determined whether or not the sensed position falls particularly within the operation figure assignment region I (step #45). In the case where it is determined that the sensed position falls within the operation figure assignment region I (step #45: Yes), the type of the operation figure 44 corresponding to the protrusion member 20 provided in the operation figure assignment region I is determined (step #46). Then, the operation figure 44 is selected, and the function associated with the operation figure 44 is achieved (step #47). After that, the input determination process is terminated. In the case where it is determined in step #45 that the sensed position falls within a region of the input reception region J other than the operation figure assignment region I (step #45: No), a restoration process is executed (step #48). In the restoration process, the protrusion member 20 which corresponds to the partition line 47 and which has been depressed by the user is brought into the protruded state again to form the elevated portion U again. After that, the input determination process is terminated.

In the case where it is determined in step #44 that the sensed position does not fall within the input reception region J (including the operation figure assignment region I) (step #44: No), a selection process is executed for a region (non-reception region) other than the input reception region J (step #49). For example, a process for scrolling a map image with the position at which the touch operation is sensed centered in the display screen 41 is executed. The input determination process is thus terminated.

### 3. Other Embodiments

Lastly, input systems according to other embodiments of the present invention will be described. A configuration disclosed in each of the following embodiments may be applied in combination with a configuration disclosed in any other embodiment unless any contradiction occurs.

(1) In each of this embodiments described above, the elevated portion U is formed at a predetermined position on the operation surface 11a by protruding the distal end portion of the protrusion member 20 from the operation surface 11a. However, embodiments of the present invention are not limited thereto. For example, the operation surface 11a may be formed using a flexible material, and the operation surface 111a may be pushed up from the back surface side by the elevation formation device 35 similar to that described above to directly form the elevated portion U on the operation surface 11a. In such a configuration, an elevated shape (undulating shape) that is deformed smoothly is formed over the entire operation surface 11a.

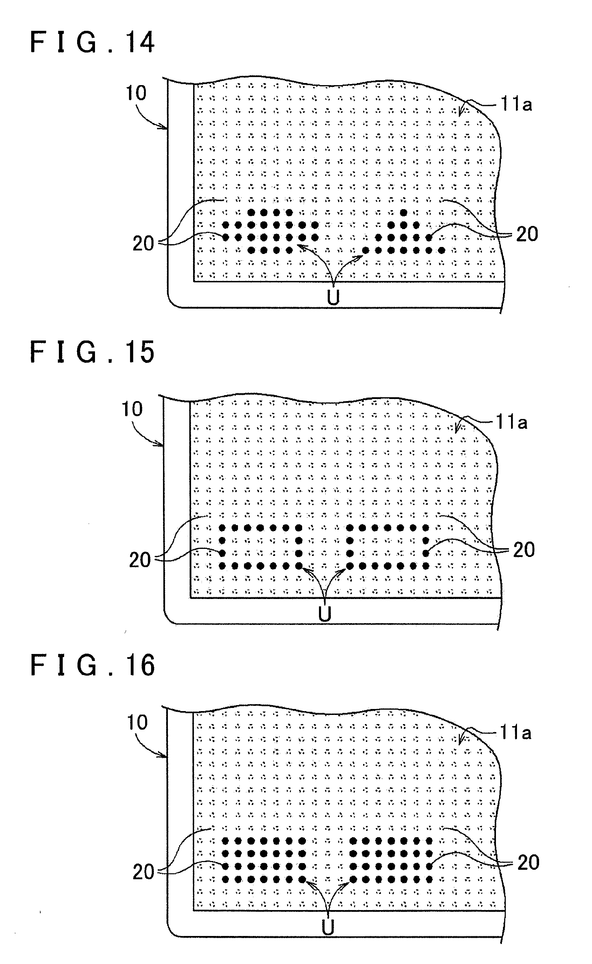

(2) In each of this embodiments described above, all pairs of protrusion members 20 corresponding to the operation figures 44 being displayed have the same arrangement as each other. However, embodiments of the present invention are not limited thereto. That is, as shown in FIG. 14, for example, the arrangement of the plurality of protrusion members 20 brought into the protruded state may differ depending on the content (type) of the operation figure 44 displayed on the display screen 41. In FIG. 14, the protrusion members 20 in the retracted state are indicated by broken lines, and the protrusion members 20 in the protruded state are filled with the black color. This provides the entirety of the plurality of protrusion members 20 in the protruded state with different tactile patterns, which enables to distinctly discriminate between the operation figures 44 through tactile sensation. In this case, the arrangement of the plurality of protrusion members 20 brought into the protruded state may have a shape corresponding to the content of the operation figure 44 displayed on the display screen 41. This facilitates intuitively discriminating the protrusion members 20 corresponding to the desired operation figure 44, and thus is more preferable.

(3) In each of this embodiments described above, the operation figure 44 being displayed is expressed in the form of two protrusion portions arranged side by side by a pair of (two) protrusion members 20. However, embodiments of the present invention are not limited thereto. That is, the operation figure 44 may be simply expressed in the form of a single protrusion portion by one protrusion member 20.
Alternatively, the operation figure 44 may be expressed in the form of a group of protrusion portions that assumes a predetermined shape as a whole by three or more protrusion members 20. In this case, the protrusion control section 52 may cause a plurality of protrusion members 20 to be protruded in a frame shape for one operation figure 44. That is, the operation figure 44 being displayed may be expressed in the form of a group of protrusion portions arranged in a frame shape as shown in FIG. 15. Alternatively, the protrusion control section 52 may cause a plurality of protrusion members 20 to be protruded in a frame shape for one operation figure 44, and may also bring all the protrusion members 20 in a region surrounded by the plurality of protrusion members 20 protruded in the frame shape into the protruded state. That is, the operation figure 44 being displayed may be expressed in the form of a group of protrusion portions arranged in a cluster as shown in FIG. 16. In such cases, the region surrounded by the protrusion members 20 in the protruded state arranged in the frame shape may be set as the operation figure assignment region I, and in the case where a predetermined operation such as a tap operation is sensed in the operation figure assignment region I, the select operation determination section 55 may determine that a select operation for the operation figure 44 corresponding to the protrusion members 20 has been performed.

(4) In each of this embodiments described above, in the case where a particular operation figure 44 is displayed on the display screen 41, the protrusion control section 52 brings the protrusion member 20 positioned at the coordinates on the operation surface 11a corresponding to the coordinates of the operation figure 44 into the protruded state. However, embodiments of the present invention are not limited thereto. That is, in the case where a plurality of particular operation figures 44 are displayed on the display screen 41, the protrusion control section 52 may bring the protrusion members 20 into the protruded state in correspondence with the positional relationship between the operation figures 44 on the display screen 41. That is, the protrusion control section 52 may bring a plurality of protrusion members 20 into the protruded state so as to establish a positional relationship corresponding to the mutual positional relationship between the coordinates of the plurality of operation figures 44 displayed on the display screen 41. In other words, the status determination section 51 may decide the positions of a plurality of elevated portions U on the operation surface 11a in correspondence with the relative arrangement between the plurality of operation figures 44 on the display screen 41, and the protrusion control section 52 may form a plurality of elevated portions U at the decided positions. In this case, for example, a plurality of protrusion members 20 are provided so as to freely appear and disappear with their arrangement in the X direction of the operation surface 11a maintained but at positions in the Y direction that are different from those in this embodiments described above. Such a configuration also allows the user to easily associate the mutual positional relationship between the plurality of protrusion members 20 recognized through tactile sensation on the operation surface 11a and the mutual positional relationship between the plurality of operation figures 44 displayed on the display screen 41 with each other, and to easily select the desired operation figure 44.

(5) In each of this embodiments described above, the drive mechanism 30 brings the protrusion member 20 into one of the protruded state (a state in which the protrusion member 20 is at the maximally displaced position within its movable range) and the retracted state (a state in which the protrusion member 20 is at the minimally displaced position within its movable range). However, embodiments of the present invention are not limited thereto. That is, the drive mechanism 30 may be configured to bring the protrusion member 20 into an intermediate state between the protruded state and the retracted state. In this case, the protrusion control section 52 may be configured to control stepwise the position of the protrusion member 20 with respect to the operation surface 11a in the protrusion direction (advancing/retracting operation direction Z) so that the protrusion member 20 can be protruded stepwise. In the case where such a configuration is adopted and the elevated portion U is formed for a plurality of types of elements forming the display content as in the second embodiment described above, the amount of protrusion of the protrusion member 20 (the amount of elevation of the elevated portion U) is preferably changed depending on the type of the corresponding element.

(6) In the second embodiment described above, one straight partition line 47 that partitions the display screen 41 in the left-right direction is displayed. However, application of the present invention is not limited thereto. For example, the present invention may of course be applied to a case where a straight partition line 47 that partitions the display screen 41 in the up-down direction is displayed and a case where a partition line 47 that partitions the display screen 41 in a frame shape (including a partial frame shape that utilizes a peripheral portion of the display screen 41) is displayed. In addition, the present invention may of course be applied to a case where a plurality of partition lines 47 are displayed at the same time. In this case, in the case where the partition lines 47 overlap each other, the position at which the elevated portion U is formed is preferably decided in consideration of such overlap.

(7) In the second embodiment described above, in the case where a depression operation for the elevated portion U corresponding to the partition line 47 is detected, a restoration process is immediately executed in order to maintain a state in which the boundary 17 is appropriately formed on the operation surface 11a at all times. However, embodiments of the present invention are not limited thereto. Such a restoration process may not be executed until start conditions determined in advance are met. Alternatively, such a restoration process may not be executed at all. In this case, it is preferably impossible or difficult to perform a depression operation for the elevated portion U corresponding to the partition line 47. For example, a lock mechanism that can lock the position of the protrusion member 20 forming the elevated portion U in the advancing/retracting operation direction Z as necessary may be provided, or the protrusion control section 52 may be configured to continuously output an electric signal for moving the protrusion member 20 corresponding to the partition line 47 to the protrusion direction side.

(8) In each of this embodiments described above, the elevated portion U is formed only in a region of the operation surface 11a other than the drag operation reception region S. However, embodiments of the present invention are not limited thereto. That is, the elevated portion U may be formed also in the drag operation reception region S depending on the situation. For example, in the case where the drag operation reception region S is set in correspondence with the main display region of the display screen 41 as in each of this embodiments described above, the elevated portion U corresponding to some of the content elements C (such as a map image) may be formed in the drag operation reception region S under predetermined conditions.

(9) In each of this embodiments described above, the drive mechanism 30 includes the piezoelectric element 31, the slide mechanism 32, and the protrusion control section 52. However, embodiments of the present invention are not limited thereto. That is, the drive mechanism 30 may have any specific configuration as long as the drive mechanism 30 can cause advancing/retracting operation of the protrusion member 20 along the advancing/retracting operation direction Z to move the protrusion member 20 between the protruded state and the retracted state. For example, the drive mechanism 30 may utilize a fluid pressure such as a liquid pressure or a gas pressure, or may utilize an electromagnetic force of an electromagnet, a solenoid, or the like. In the case where the touch pad 10 of the capacitance type is provided and a motor, a solenoid, or the like is used as an actuator of the drive mechanism 30, for example, noise can be caused along with drive of the actuator to vary the capacitance. Thus, in such a case, a shield portion (such as an electromagnetic shield, for example) that blocks noise caused along with drive of the actuator is preferably provided.

(10) In each of this embodiments described above, the operation plate 11 of the touch pad 10 is provided with a plurality of hole portions 12 and the same number of protrusion members 20. However, embodiments of the present invention are not limited thereto. That is, only one hole portion 12 and one protrusion member 20 may be provided. In this case, for example, the display position on the display screen 41 of the operation figure 44 that is frequently selected may be set to a fixed position, and the hole portion 12 and the protrusion member 20 may be provided at the position on the operation surface 11a corresponding to the operation figure 44.

(11) In each of this embodiments described above, the protrusion member 20 is driven so as to be advanced and retracted along the advancing/retracting operation direction Z set to a direction orthogonally intersecting the operation surface 11a. However, embodiments of the present invention are not limited thereto. That is, the advancing/retracting operation direction Z may be set to a direction inclined with respect to, rather than orthogonally intersecting, the operation surface 11a. In this case, in the case where the touch pad 10 is disposed generally horizontally at the center console portion as in this embodiments described above, for example, the advancing/retracting operation direction Z is preferably set to be inclined toward a driver's seat.

(12) In each of this embodiments described above, the touch pad 10 of the capacitance type which can sense the object to be sensed D in contact with or in proximity to the operation surface 11a is used. However, embodiments of the present invention are not limited thereto. That is, the touch pad 10 of the resistance film type may also be utilized in place of the touch pad 10 of the capacitance type. Alternatively, the touch pad 10 of a pressure sensitive type which can sense the object to be sensed D in contact with the operation surface 11a may also be utilized.

(13) In each of this embodiments described above, the operation input device 4 is communicably connected to the display input device 40 formed by integrating a display device and an input device such as a touch panel. However, embodiments of the present invention are not limited thereto. That is, the presence of a touch panel (the first operation input unit in this embodiments described above) is not essential, and it is only necessary that the operation input device 4 should be connected to a display device including at least a display screen.

(14) In each of this embodiments described above, the state sensing section 56 is configured to sense the actual protrusion status of each protrusion member 20 on the basis of information acquired from a position sensor. However, embodiments of the present invention are not limited thereto. For example, the state sensing section 56 may be formed using the piezoelectric element 31 provided in the drive mechanism 30 as a sensor element, by utilizing the characteristics of the piezoelectric element 31. As discussed above, when the protrusion control section 52 drives the protrusion member 20 so as to be advanced and retracted, application of a voltage is stopped after a predetermined time elapses. Therefore, providing a configuration that enables to sense an external force (a depressing force provided by the user) applied to the piezoelectric element 31 via the protrusion member 20 and the coupling member 33 as an electric signal after the stop of the voltage application may achieve a configuration that enables to sense an operation (depression operation) for the protrusion member 20 performed by the user. Then, the state sensing section 56 may sense the actual protrusion status of each protrusion member 20 on the basis of the sensed depression operation and the protrusion status of each protrusion member 20 determined by the status determination section 51. That is, in the case where an electric signal from the piezoelectric element 31 corresponding to the protrusion member 20 in the protruded state is sensed, the state sensing section 56 determines that the protrusion member 20 has been brought into the retracted state. Meanwhile, in the case where a lapse of the predetermined time is detected by a timer or the like after the piezoelectric element 31 corresponding to the protrusion member 20 in the retracted state is vibrated, the state sensing section 56 determines that the protrusion member 20 has been brought into the protruded state.

(15) In the first embodiment described above, the operation input computation section 50 includes the state sensing section 56 and the input reception section 57. However, embodiments of the present invention are not limited thereto. That is, the state sensing section 56 and the input reception section 57 are functional sections configured to assistively help the position sensing section 53 and the select operation determination section 55, which cooperate with each other, determine whether or not a select operation is performed (see FIG. 10), and are not necessarily provided in the operation input computation section 50. For example, in the case where the input determination process is performed only on the basis of a touch operation performed on the operation surface 11a as in the second embodiment described above, the state sensing section 56 and the input reception section 57 may be omitted. In this case, the height of protrusion (amount of protrusion) of the protrusion member 20 in the protruded state is preferably set to be substantially equal to but larger than the limit distance for sensing the object to be sensed D. This allows the user to automatically perform a tap operation through a series of operations from a drag operation to a depression operation for a target protrusion member 20 performed on the operation surface 11a, and to easily select a target operation figure 44.

(16) In each of this embodiments described above, the operation input computation section 50 includes the functional sections 51 to 57. However, this embodiment of the present invention is not limited thereto. That is, the assignment of the functional sections described in relation to this embodiments described above is merely illustrative, and a plurality of functional sections may be combined with each other, or a single functional section may be further divided into sub-sections.

(17) In each of this embodiments described above, the operation input system 3 allows to perform operation input to the in-vehicle navigation apparatus 1. However, this embodiment of the present invention is not limited thereto. That is, the input system according to the present invention may allow to perform operation input to a navigation system in which the components of the navigation apparatus 1 described in this embodiments described above are distributed to a server device and an in-vehicle terminal device, a laptop personal computer, a gaming device, and other systems and devices such as control devices for various machines, for example.

(18) Also regarding other configurations, this embodiments disclosed herein are illustrative in all respects, and the present invention is not limited thereto. That is, a configuration not described in the claims of the present invention may be altered without departing from the object of the present invention.

The present invention may be suitably applied to an input system including a touch pad serving as a pointing device.
An input system comprises a display device having a display screen, an input detection device that has an operation surface provided at a distance from the display device and detects an operation performed on the operation surface, and a control device. The input system further comprises an elevation formation device capable of forming an elevated portion on the operation surface, and the control device controls a display content to be displayed on the display screen, decides a position of the elevated portion on the operation surface in accordance with the display content, and controls the elevation formation device so as to form the elevated portion at the decided position.

## Claims

1. An input system comprising:
a display device (40) having a display screen (41);
an input detection device (10) that has an operation surface (11a) provided at a distance from the display device (40) and detects an operation performed on the operation surface (11a); and
a control device (5), wherein:
the input system further comprises an elevation formation device (35) capable of forming an elevated portion (U) on the operation surface (11a); and
the control device (5) is configured to control a display content to be displayed on the display screen (41), to decide a position of the elevated portion (U) on the operation surface (11a) in accordance with the display content, and to control the elevation formation device (35) so as to form the elevated portion (U) at the decided position.

2. The input system according to claim 1, wherein:
the display content includes a functional element (F) to which a function for executing a process is set; and
the control device (5) is configured to decide the position of the elevated portion (U) on the operation surface (11a) on the basis of an arrangement of the functional element (F) on the display screen (41).

3. The input system according to claim 2, wherein:
the display content includes a plurality of the functional elements (F); and
the control device (5) is configured to decide the position of the elevated portion (U) on the operation surface (11a) on the basis of a relative arrangement between the plurality of functional elements (F).

4. The input system according to claim 3, wherein:
the elevation formation device (35) is capable of forming a plurality of the elevated portions (U) on the operation surface (11a); and
the control device (5) is configured to decide the positions of the plurality of elevated portions (U) such that the plurality of elevated portions (U) are formed on the operation surface (11a) in correspondence with the relative arrangement between the plurality of functional elements (F) on the display screen (41).

5. The input system according to claim 2, wherein:
the functional element (F) is an operation figure which is displayed on the display screen (41) and for which a select operation can be performed; and
in the case where a depression operation for the elevated portion (U) corresponding to the operation figure is detected, the control device (5) is configured to receive input of a select operation for the operation figure.

6. The input system according to claim 1, wherein:
the display content includes a partition line (47) that partitions the display screen (41) into a plurality of partitions; and
the control device (5) is configured to decide the position of the elevated portion (U) on the operation surface (11a) on the basis of an arrangement of the partition line (47) on the display screen (41).

7. The input system according to claim 6, wherein
the control device (5) is configured to receive operation input for each of the partitions on the operation surface (11a) separated by the elevated portion (U) corresponding to the partition line (47).

8. The input system according to claim 6, wherein
in the case where a depression operation for the elevated portion (U) corresponding to the partition line (47) is detected, the control device (5) is configured to execute a restoration process for restoring the elevated portion (U).

9. The input system according to any one of claims 1 to 8, wherein
in the case where a depression operation for the elevated portion (U) is detected, the control device (5) is configured to determine an element of the display content corresponding to the elevated portion (U) which has been subjected to the depression operation on the basis of a position of an operation on the operation surface (11a), and to receive operation input to the element.

10. The input system according to claim 1, wherein
the control device (5) is configured to define a part of the operation surface (11a) as a drag operation reception region (S) in which a drag operation performed on the operation surface (11a) is preferentially received, and to form the elevated portion (U) in a region of the operation surface (11a) other than the drag operation reception region (S).

11. The input system according to claims 1, wherein:
the elevation formation device (35) includes a protrusion member (20) that is advanced and retracted along a direction intersecting the operation surface (11a), and is capable of forming the elevated portion (U) by protruding the protrusion member (20) from the operation surface (11a); and
the protrusion member (20) is supported so as to be depressible to a position at or below the operation surface (11a) by a depression operation performed from outside.
